(19) Europäisches Patentamt
European Patent Office
Office européen des brevets

(11) EP 2 317 633 A2

(12) EUROPEAN PATENT APPLICATION

(43) Date of publication:
04.05.2011 Bulletin 2011/18

(51) Int Cl.:
H02K 21/22 (2006.01)

(21) Application number: 10189088.7

(22) Date of filing: 27.10.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.10.2009 EP 09174377

(71) Applicants:
• University of Bahrain
Sakhir (BH)

• Baserrah Salwa
28329 Bremen (DE)

(72) Inventor: Baserrah, Salwa
28329, Bremen (DE)

(74) Representative: Witte, Weller & Partner
Postfach 10 54 62
70047 Stuttgart (DE)

(54) **Transverse Flux Machine**

(57)     The present invention relates to a transverse flux machine, in particular transverse flux motor, comprising a rotor comprising a plurality of permanent magnet elements of opposite magnetisation direction alternately coaxially arranged around a rotation axis, a stator comprising two or more stator phase units coaxially arranged around said rotation axis and separated, wherein said stator phase units each have the form of sector of a ring arranged at different angular sectors around said rotation axis and each have a number of stator teeth facing said rotor and wherein said stator phase units form a closed stator ring, and a number of stator windings, the number of said stator windings corresponding to the number of stator phase units, wherein each stator winding is formed as a closed loop, which is arranged at the same angular sector as an associated stator phase unit and surrounds at least part of the associated stator phase unit.

Fig.1

Printed by Jouve, 75001 PARIS (FR)

**Description**

The present invention relates to a transverse flux machine (TFM), in particular a transverse flux motor.

Direct-driven motors are the new trend of the electric motors, which are considered to improve the efficiency of the electric vehicle (EV) drive system. This type of motors is directly mounted inside the wheel, called also in-wheel or hub-motor. Such motor will eliminate transmission gears or mechanical differentials with their associated energy loss; and this is the main reason behind the improvement in efficiency.

Various comparison surveys of merits and demerits have been already reported the types of electric motors that are suitable for EV. Induction motor drives are preferred for EV propulsion purpose in L. Chang, "Comparison of AC drives for electric vehicles - A report on experts' opinion survey", IEEE AES Systems Magazine, Vol. 9, Issue 8, pp. 7-11, Aug.1994. Alternatively, permanent magnet brushless dc motor featured compactness, low weight and high efficiency. DC, induction, permanent magnet synchronous, switched reluctance and brushless DC are compared in N. Hashemnia and B. Asaei, "Comparative study of using different electric motors in the electric vehicles", Proceedings of the 2008 International Conference on Electrical Machines, pp.1257-1261, Sept. 2008 and it is concluded that among these motors, PM (permanent magnet) and brushless DC motors are attractive choice for EV applications.

Different compact constructions of different electric motors, such as synchronous, PM and switched reluctance motors, of relatively high torque density and achieving improvements on the overall efficiency of the electric vehicle are constructed in M. Terashima, T. Ashi-kaga, T. Mizuno, K. Natori, N. Fujiwara and M. Yada, "Novel motors and controllers for high-performance electric vehicle with four in-wheel motors", IEEE Transactions on Industrial Electronics, Vol. 44, No. 1, pp.28-37, Feb. 1997; K. Ohyama, M.N.F., Nashed, K., Aso, H. Fujii and H. Uehara, "Design using finite element analysis of Switched Reluctance Motor for Electric Vehicle", Information and Communication Technologies, IC-TTA'06, Vol.1, pp. 727-732, April 2006; and L. Weili, S. Man and H. Fei, "Optimal design and finite element analysis of switched reluctance motor for electric vehicles", IEEE Vehicle and Propulsion Conference (VPPC), pp. 1-5, Sept. 2008. and still there are more electric motor design optimisation schemes appearing in electric vehicle research.

In comparison with conventional radial-flux machines, axial-flux permanent magnet (AFPM) machines will allow exploitation of a higher percentage of stator winding for torque production (see e.g. F. Caricchi, F. Crescimibini, O. Honorati, A. Di Napoli and E. Santini, "Compact wheel direct drive for EVs", IEEE Industry Applications Magazine, Vol. 2, No. 6, pp. 25-32, Nov.-Dec. 1996 or N. B. Simsir and H. B. Ertan, "A comparison of torque capabilities of axial flux and radial flux type of brushless DC (BLDC) drives for wide speed range applications", IEEE Int. Conference on Power Electronics and Drive Systems, PEDS'99, pp. 719-724, July 1999). Several AFPM wheel motors designed for electric cars are compared in Z. Zhang, F. Profumo and A. Tenconi, "Axial flux machines Drives: A new viable solution for electric cars", IEEE Trans. on Industrial Electronics, Vol. 44, No. 1, pp. 39-45, Feb.1997 and multi-stage AFPM constructed in F. Caricchi, F. Crescimibini, F. Mezzetti and E. Santini, "Multi-stage axial-flux PM machine for wheel direct drive", IEEE Trans. on Industry Applications, Vol. 1, pp. 679-684, Oct.1995, and concluded that machines of interior PM give the best compromise in terms of power density, efficiency, compactness and long-term overload capability characteristics. Permanent magnet (PM) motor for solar-powered in-wheel motor is demonstrated and examined in H.C. Lovatt, V.S. Ramsden and B.C. Mecrow, "Design of an in-wheel motor for a solar-powered electric vehicle", IEE Proceedings of Electric Power Applications, Vol. 145, No. 5, pp. 402-408, Sept. 1998, where an axial field air gap winding is utilized.

TFM with flux concentrated configuration is designed for in-wheel applications and reported in K. Y. Lu, "Design study for controllable electric motor for three wheel drive, in-wheel mounting on professional, electric, lawn mower", Ph.D. Thesis, Aalborg University, Denmark, 2005. Only one phase has been constructed and tested. The idea of TFM with two-phase windings located around the stator for small power range is described in G. Kastinger, "Contributions to small electrical drives with toroidal coils", "Beiträge zu Ringspulenkleinantriebe", Ph.D. Thesis, Johannes Kepler Universität Linz, Austria, 2001 with axial permanent magnet (PM), however, no thorough study or design improving investigations have been carried out. Nevertheless, a comparison study of power density for axial flux machines with various topologies have been conducted in S. Huang, J .Luo, F. Leonardi and T. A. Lipo, "A Comparison of power density for axial flux machines based on general purpose sizing equations", IEEE Trans. on Energy Conversion, Vol.14, pp. 185-192, June 1999, where general purpose sizing and power density equations are being presented. A sector-wise, three phase surface PM-TFM with distributed windings as an inner rotor machine is described and analytically modelled in P. Anpalahan, J. Soulard and H. P. Nee, "Design steps towards a high power factor transverse flux machine", Proceedings of European Conference and Applications (EPE), pp.1-6, August 2001. The power factor is stated to be improved close to 0.7; however, the torque density will be reduced.

It is an object of the present invention to provide a transverse flux machine, in particular a transverse flux motor, in particular for in-wheel motor applications, having a compact design of small axial length and maximum exploitation of radial space with high torque density.

According to the present invention a transverse flux machine is presented comprising:

-    a rotor comprising a plurality of permanent magnet elements of opposite magnetisation direction alternately coaxially arranged around a rotation axis,
- a stator comprising two or more stator phase units coaxially arranged around said rotation axis and separated, wherein said stator phase units each have the form of sector of a ring arranged at different angular sectors around said rotation axis and each have a number of stator teeth facing said rotor and wherein said stator phase units form a stator ring,
- a number of stator windings, the number of said stator windings corresponding to the number of stator phase units, wherein each stator winding is formed as a closed loop, which is arranged at the same angular sector as an associated stator phase unit and surrounds at least part of the associated stator phase unit.

According to the present invention a transversal flux machine, in particular a transverse flux motor, useful for in-wheel motor applications is provided. This transversal flux permanent magnet motor is designed to achieve high torque-to-weight ratio and is suitable for direct-drive wheel applications. As in conventional TFM, the phases are located under each other, which will increase the axial length of the machine. The idea of the proposed invention is to reduce the axial length of TFM, by placing the windings around the machine and by shifting those from each other, e.g. by 120° in case of three phases or 90° for two phases, therefore, a remarkable reduction on the total axial length of machine will be achieved while keeping the torque density high. In a preferred embodiment the three phases have been split into two halves and placed opposite each other to ensure the mechanical balance and stability of the stator. The mechanical phase shifts between the phases have been also taken into account.

These and other aspects of the invention will be apparent from and elucidated with reference to the embodiment (s) described hereinafter. In the following drawings

Fig. 1 shows a first embodiment of a FC-TFM according to the present invention,
Fig. 2 shows a stator winding of the TFM shown in Fig. 1,
Fig. 3 shows an embodiment of a known FC-TFM,
Fig. 4 shows a stator winding of the TFM shown in Fig. 3,
Fig. 5 shows a top view of a portion of the rotor and the stator of the FC-TFM shown in Fig. 1,
Fig. 6 shows a perspective view of a portion of the rotor and the stator of the FC-TFM shown in Fig. 1,
Fig. 7 shows a diagram illustrating the selection of the PM number selection for a TFM shown in Fig. 1,
Fig. 8 shows a second embodiment of a FC-TFM according to the present invention,
Fig. 9 shows a diagram illustrating the selection of the PM number selection for a TFM shown in Fig. 8,
Fig. 10 shows a third embodiment of a FC-TFM according to the present invention,
Fig. 11 shows a diagram illustrating the selection of the PM number selection for a TFM shown in Fig. 10,
Fig. 12 shows a fourth embodiment of a FC-TFM according to the present invention,
Fig. 13 shows a diagram illustrating the selection of the PM number selection for a TFM shown in Fig. 12,
Fig. 14 shows two embodiments of a SPM-TFM according to the present invention,
Fig. 15 shows a diagram illustrating the torque components for TFMs shown in Figs. 1 and 8,
Fig. 16 shows a diagram illustrating the torque components for TFMs shown in Figs. 1 and 8 obtained from simulations,
Fig. 17 shows a diagram illustrating the torque components for TFMs shown in Figs. 1 and 8 obtained after mathematical manipulations,
Fig. 18 shows a fifth embodiment of a FC-TFM according to the present invention a in-wheel motor,
Fig. 19 shows a diagram illustrating the torque components for a TFM shown in Fig. 18,
Fig. 20 shows different views of an in-wheel motor including an embodiment of a FCPM-TFM according to the present invention,
Fig. 21 shows a perspective view of parts of the in-wheel motor shown in Fig. 20,
Fig. 22 shows different views of the laminations of the stator of the in-wheel motor shown in Fig. 20,
Fig. 23 shows diagrams illustrating the electromagnetic torque of the in-wheel motor shown in Fig. 20,
Fig. 24 shows a perspective view of two embodiments of an in-wheel motor according to the present invention,
Fig. 25 shows another view of an embodiment of an in-wheel motor according to the present invention,
Fig. 26 shows another embodiment of a stator built with SMC material for use in a TFM according to the present invention, and
Fig. 27 shows a diagram illustrating the electromagnetic torque of a TFM having a stator as shown in Fig. 26.

Nomenclature

*FCPM :* flux concentrated permanent magnet
*TFM* : Transverse flux machine

*FE-* : Finite element

σ : Maxwell stress tensor

$B_r$ : Radial component of flux density, B

$B_\theta$ : Tangential component of flux density, B

$B_z$ : Axial component of flux density, B

$B_g$, $\overline{n}$ : air gap B and normal unit vector, respectively

$f_r$ : Radial component of force, f

$f_\theta$ : Tangential component of force, f

$F_n$ : Normal component of force, f

$F_z$ : Axial component of force, f

$T$, $K_M$ : Torque, flux concentrating factor, respectively

$r$, $S$ : Radius and surface area, respectively

$\mu_{air}$, $\mu_{PM}$: Permeability of air and PM, respectively

$H$ : Magnetic field strength

$h_{PM}$ : Height of PM in direction of magnetization

$l_g$, $l_{air}$: Air gap and air path along pole length, respectively

Transverse flux machine underlines the high torque motors, which can be classified as surface permanent magnet TFM (SPM-TFM) and flux concentrated TFM (FC-TFM). Permanent magnets in SPM-TFM are magnetised in direction perpendicular to the direction of rotation, whereas the permanent magnets in FC-TFM are of parallel magnetisation direction to the rotation. Since the torque density achieved by FC-TFM is higher than the SPM-TFM, it is preferred to use FC topology for constructing in-wheel motors, though it is mechanically difficult in construction. In this description, flux concentrated configurations will be considered in detail, and also other constructions for SPM-TFM will be pointed out.

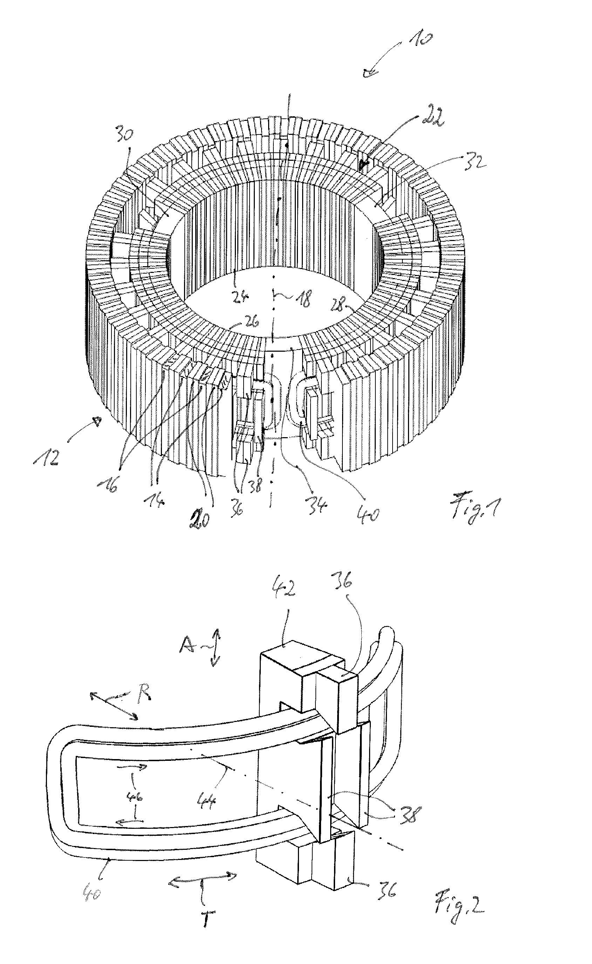

In order to locate the windings around the stator, certain steps should be managed so that the mechanical shift of the windings with respect to the rotor will coop with the phase of the electric loading. Specifying the number of poles in the stator for each phase is the starting step and it should be selected as an even number, on each layer of the stator, so that the winding can be wounded feasibly around them. Fig. 1 shows an embodiment of a 3-phase FC-TFM 10 of 56 poles with distributed three full phases. The TFM 10 comprises a rotor 12 comprising a plurality of permanent magnet elements 14, 16 of opposite magnetisation direction alternately coaxially arranged around a rotation axis 18. The rotor 12 further comprises a plurality of rotor poles 20, wherein a rotor pole 20 is arranged between each two permanent magnet elements 14, 16 of opposite magnetisation direction. The TFM 10 further comprises a stator 22 comprising two or more (here three) stator phase units 24, 26, 28 coaxially arranged around said rotation axis 18 and separated by distance elements 30, 32, 34 wherein said stator phase units 24, 26, 28 each have the form of sector of a ring arranged at different angular sectors around said rotation axis 18 and each have a number of stator teeth 36, 38 facing said rotor 12 and wherein said stator phase units 24, 26, 28 together with the distance elements 30, 32, 34 form a closed stator ring. Still further, the TFM 10 comprises a number of stator windings 40 wherein the number of said stator windings 40 corresponds to the number of stator phase units 24, 26, 28, wherein each stator winding 40 is formed as a closed loop, i.e. saddle form, which is arranged at the same angular sector as an associated stator phase unit 24, 26, 28 and surrounds at least part of the associated stator phase unit 24, 26, 28.

A single stator winding 40 and a single stator phase element 42 including stator teeth 36, 38 showing how the stator winding 40 (formed as a multi-turns saddle phase winding in this embodiment) is arranged between the teeth 36, 38 is depicted in Fig. 2. As can be seen the stator teeth 36, 38 of the stator phase element 42 are divided into a first teeth part 38 and a second teeth part 36, the first teeth part 38 being arranged, seen in axial direction A, in the central area of the stator phase element 42 and the second teeth part 36 being arranged, seen in axial direction, in the (upper and lower) edge areas adjacent said central area. As can further be seen, the first teeth part 38 and the second teeth part 36 are displaced in tangential (angular) direction T. The closed loop of the stator winding 40 is arranged about an individual central loop axis 44 arranged in radial direction R and is provided in operation with a stator current flowing through the stator winding as indicated by arrows 46.

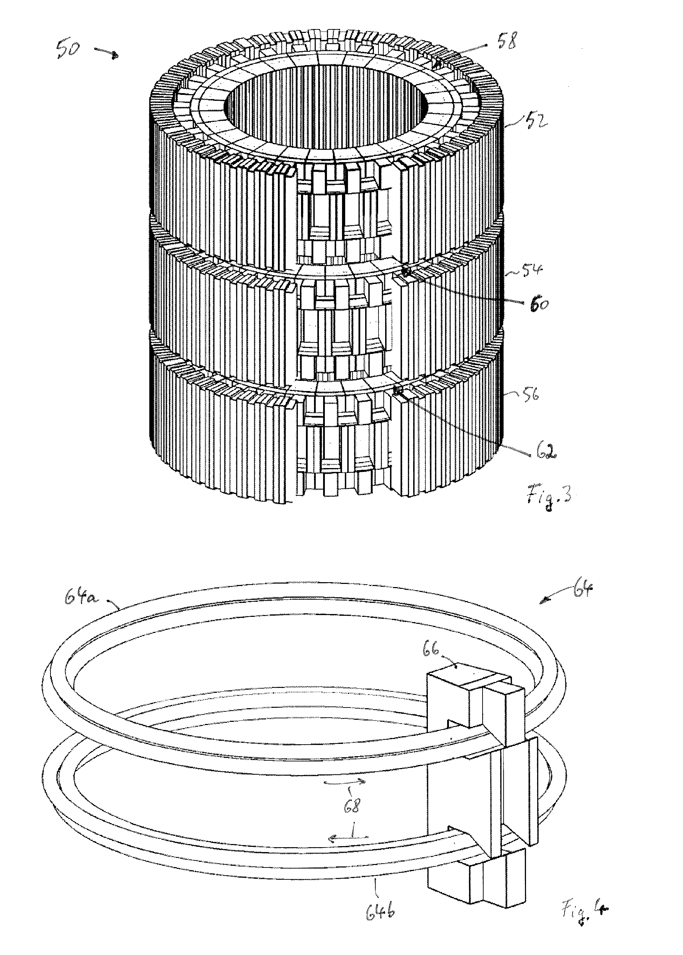

The new design of the proposed TFM provides for an improvement of compactness and, at the same time, an increase of the torque for the same current rating and the same axial length. The aim of the construction is the maximum exploitation of stator field without the increasing of stator current that are located on the circumferential plane of the machine. For comparison with the proposed embodiment of the FCPM-TFM shown in Fig. 1, Fig. 3 shows a known embodiment of a 3-phase FCPM-TFM 50 having three rotor units 52, 54, 56 (each rotor unit 52, 54, 56 being identical to the rotor 12 of the TFM 10 shown in Fig. 1) and three stator phase units 58, 60, 62, each being formed as full ring and being provided with its associated stator winding 64.

A stator winding 64 associated with a single stator phase unit is depicted in Fig. 4 together with a stator phase element 66 of the stator phase unit. As can be seen the stator winding comprises two separate (conventional) ring coils 64a, 64b which are provided with individual (preferably identical) currents of opposite direction as indicated by arrows 68

The three phases (each having a stator phase unit, a rotor unit and a stator winding) of the known TFM 50 as shown in Fig. 2 are stacked above each other in three layers consuming much more space in axial direction than the proposed TFM 10 as shown in Fig. 1 in which all elements are arranged in a single layer consuming only about one third of the space in axial direction of the TFM 50.

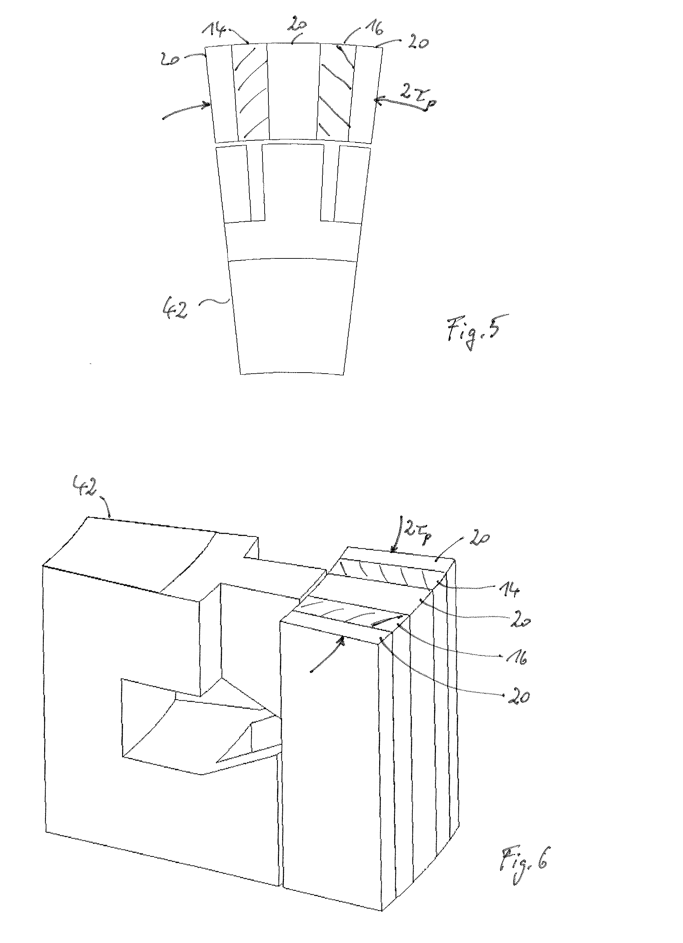

The pole number represents the number of the PMs or the rotor poles. The pole pitch, $\tau_p$ is defined as the air gap diameter multiplied by 3.141 or simply 360° divided by number of poles, which is equal to 6.43° in an exemplary implementation. Each stator phase unit 24, 26, 28 has e.g. sixteen pole pitches, $16\tau_p$. Each two complete stator poles 42 (also called stator phase elements) as shown in Figs. 5 (to view) and 6 (side view) correspond to $2\tau_p$. The stator poles 42 are divided into two parts, one part (tooth) 38 being located in the centre of the axial machine length, and the other part 36 comprising stator pole teeth shifted by $1\tau_p$ from the ones in the centre and are placed in two axially separated layers. In this manner, each side of stator winding 40 will be sandwiched by the teeth 36, 38 of the stator poles 42 as shown in Fig. 2.

As the pole pitch pair number for each phase is specified for this machine to be 8 in this exemplary implementation, the corresponding number of rotor poles 20 for each phase is sixteen, since each $1\tau_p$ is equivalent to the mean distance between two rotor poles 20. As a result, the number of rotor poles 20 for the three phases will be calculated as $3\times16 = 48$ rotor poles. By placing the stator phase unit 24 of the stator 22 and its corresponding rotor phase span the first step of the design will be accomplished. Similarly, the second stator phase unit 26 which is identical to the first stator phase unit 24 but displaced by a mechanical shift of 120° electrically is added. The mechanical shift, $\theta_{3\phi}$, is equivalent to $2/3\ \tau_p$ and calculated by (1):

$$\theta_{3\phi} = 120° \times \frac{2}{P} \qquad (1)$$

where P = number of poles

In order to achieve sufficient areas between the phases around the stator, a quantity of multiple of $\tau_p$ will be added to $\theta_{3\phi}$. Therefore; the mechanical displacement between the stator phases for full winding arrangement, $\delta_{3\phi\text{-}F}$, can be calculated as in (2):

$$\delta_{3\phi\text{-}F} = \theta_{3\phi} + q \times \tau_p \qquad (2)$$

where q = 0, 2, 4, 6, ..., P

The machine is designed for q = 2, consequently, the number of rotor poles for the two phases can be easily deducted as 16 poles (i.e. phase 1) + 2 poles (i.e. $2\tau_p$) + 1 pole (i.e. mechanical shift) + 16 (i.e. phase 2), this will result in 34 rotor poles and fraction of one rotor pole that corresponds to $2/3\ \tau_p$. Following the same manner, the third phase of the stator will be placed, which will lag phase one by $4/3\ \tau_p$ i.e., 240 electrical degrees.

The resulting number of rotor poles for the whole machine will result in: $3\times16$ poles (i.e. 3 phases) $+3\times2$ (i.e. $2\tau_p$) + 3 (i.e. $\theta_{3\phi} = 2/3\ \tau_p$) = 56 rotor poles. As a matter of fact each stator phase corresponds to 120 mechanical degrees i.e., $1\times16$ (i.e. phase1) + 1(i.e. $2\tau_p$) +1(i.e. $\theta_{3\phi} = 2/3\ \tau_p$). Thus, $18\tau_p + 2/3 \times \tau_p = (56/3) \times \tau_p = (56/3) \times 6.43° = 120°$. The mechanical phase span, $\Theta_{3\phi\text{-}F}$, can be calculated by (3):

$$\Theta_{3\phi\text{-}F} = \frac{360° - 3 \times \delta_{3\phi\text{-}F}}{3} \qquad (3)$$

By setting *q* = 1 und considering only one-half of the mechanical shift in (2), the inner distances between the phases can be reduced and it is calculated to be $1\times\tau_p + 0.5\times$ mechanical shift. This will require reversing the winding terminals. As reducing the distance between the phases will be superior to the interaction torque, the effect of interaction mutual flux between the phases will rise and considering the phases to behave independently, will not be to a certain aspect correct.

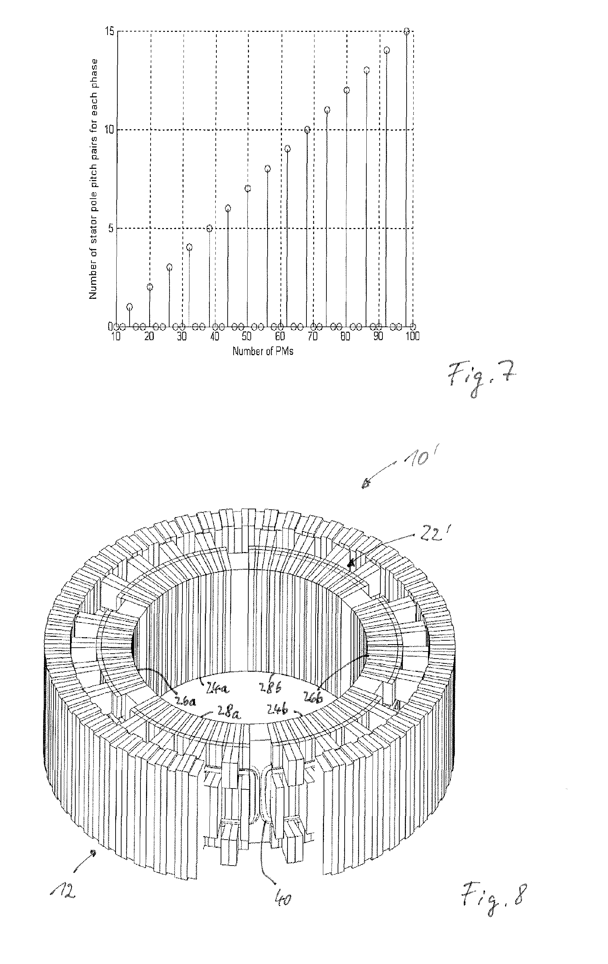

TFMs with distributed windings around the circumference can be constructed only with a certain number of poles in the rotor in order to confirm the mechanical shift with the balance of the construction. The great advance in power electronic devices technology and control schemes allow designing efficient power supplies with different phase shifts e.g., of 30° or 60°, thus makes the construction of TFM with distributed windings with mechanical shift other than 120° possible. Fig. 7 shows the allowable number of poles suitable for building TFMs with distributed windings around the circumference in relation to number of stator pole number on each layer for each phase. Fig. 7 has been conducted while considering the mechanical distances between phases for $q = 2$.

A further embodiment of an FC-TFM 10' according to the present invention is shown in Fig. 8 (for an exemplary implementation with 56 poles). In order to consider the mechanical balance of the machine, each stator phase unit of the stator 22' has been split into two parts 24a, 24b, 26a, 26b, 28a, 28b in this embodiment and placed opposite each other so that when one part of phase is feeding the machine, its facing part will also be on operation. This will emphasise the axial mechanical stress balance symmetrically. The same method that was carried out with full winding distribution, through placing the (in total six) windings 40 around the stator 22', is applied here with taking into consideration a distance of $1\tau_p + 1/3\ \tau_p$ between the split phases, i.e., half the distance of distributed full winding structure as shown in (4):

$$\delta_{3\phi\text{-}S} = \left(\frac{1}{q}\right) \times \theta_{3\phi} + \left(\frac{2}{q}\right) \times \tau_p \qquad (4)$$

where $q = 2, 4, 6, ..., P$.

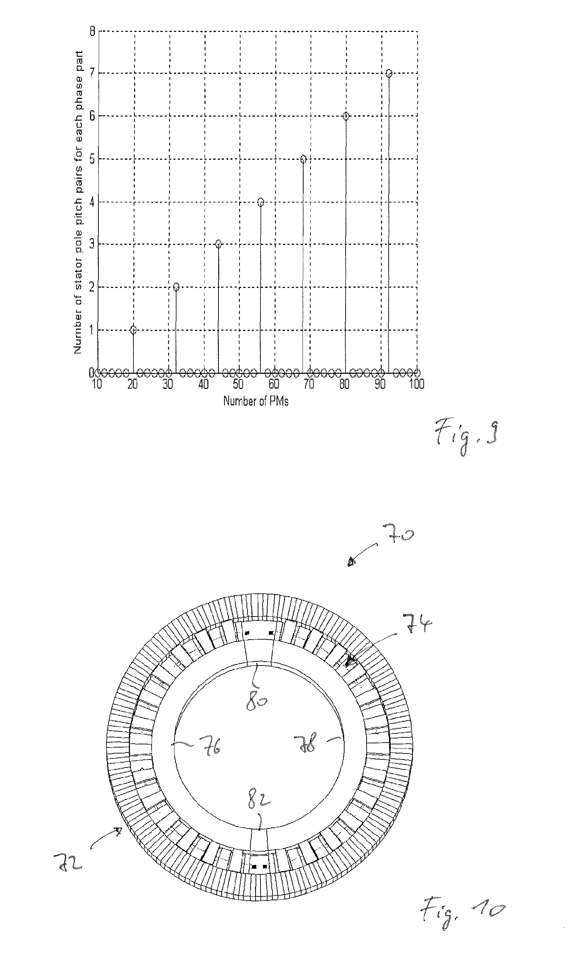

The mechanical shift is considered to be half that of the full three-phase windings, which is $2/3\ \tau_p$. In this way, the phases can be supplied with reverse currents. Therefore, the phase sequence will be as each phase lags the other by 120° for full distributed winding machine, while reverse order of phases will be expected for the split phase TFM. This can definitely be explained in terms of the mechanical shift, since $1\tau_p + 1/3\ \tau_p$ corresponds to 240° where $2\tau_p + 2/3\ \tau_p$ corresponds to 120° i.e., phase shift of 120 electrical degrees. The suitable pole number for split phase three-phase FC-TFM is shown in Fig. 9 where each phase is divided into two equal parts.

The actual mechanical phase span for each phase part can be calculated by (5):

$$\Theta_{3\phi\text{-}S} = \frac{360^o \text{-} 3q \times \delta_{3\phi\text{-}S}}{3q} \qquad (5)$$

The same rotor 12 is used for two different stator structures with full distributed and split distributed windings. The most difficult part to be constructed is the rotor since the permanent magnets are difficult to be fixed around the frame. However, the construction of stator is simplified by making use of SMC material, which permits flexible machine design and features additionally, very low eddy current loss and possibilities to improve thermal characteristics. Despite the low permeability of the SMC material, it is considered to be most appropriate for PM-machines as the magnetic reluctance of the magnet dominates the magnetic circuit; hence, the motor will be insensitive to the permeability of the core. Pressing the phase sectors by using SMC will enable the placement of the windings packets more easily and efficiently too, especially when the machine is to be built in mass production.

Two-phase TFM can as well be constructed with distributed full and split windings around the stator. Fig. 10 shows a top view of an embodiment of a two-phase TFM 70 with full windings of 56 poles, said TFM 70 having a rotor 72, a stator 74 with two stator phase units 76, 78 separated by distance elements 80, 82. Apparently, the two-phase TFM 70 with full windings distribution will exhibit additional noise problems since there is mechanical instability, due to unequal mechanical distance between the two phases for any choice of P. The mechanical shift for two-phase winding is one-half $\tau_p$ and can be calculated by (6):

$$\theta_{2\phi} = 90^o \times \frac{2}{P} \qquad (6)$$

The unequal mechanical distances between the phases can be calculated by using (7) and (8):

$$\delta_{2\phi\text{-}F_1} = \theta_{2\phi} + q \times \tau_p \qquad (7)$$

$$\delta_{2\phi\text{-}F_2} = q \times \tau_p - \theta_{2\phi} \qquad (8)$$

where $q$ = 0, 1, 2,..., P

The mechanical phase span, $\Theta_{2\phi\text{-}F}$, can be obtained from (9).

$$\Theta_{2\phi\text{-}F} = \frac{360^o - \left(\delta_{2\phi\text{-}F_1} + \delta_{2\phi\text{-}F_2}\right)}{2} \qquad (9)$$

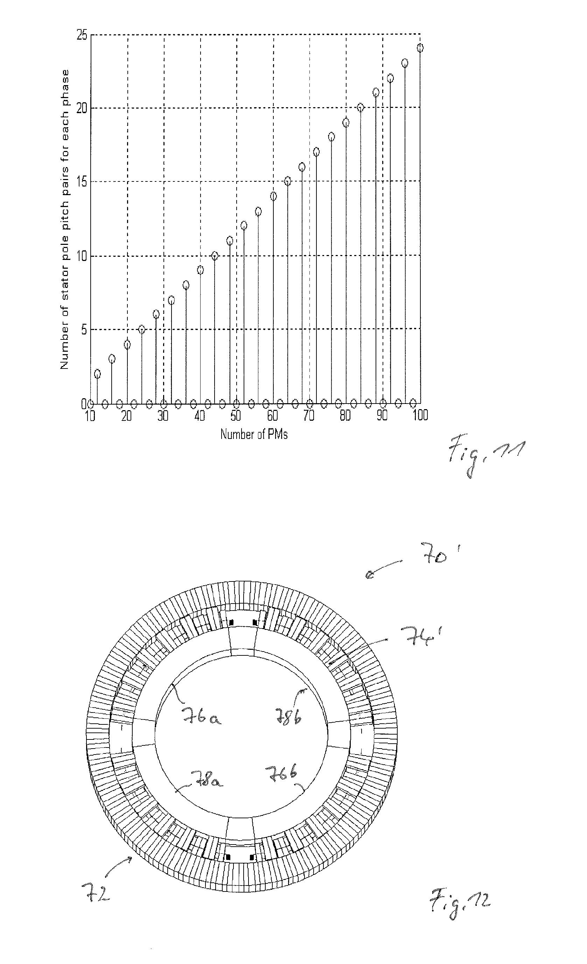

In Fig. 11 the possible number of stator pole pitch pairs for each phase has been calculated for different pole numbers.

Splitting the two stator phase units 76, 78 into parts will eliminate the mechanical instability and insure equal distances between all the phases' divisions. By comparing Figs. 7 and 11, the suitable rotor pole number for 3-phase and 2-phase windings configuration, respectively, are not the same. Obviously, the pole number arrangement, which has been applied for the 2-phase machine can not be applied for the 3-phase machine and vice versa.

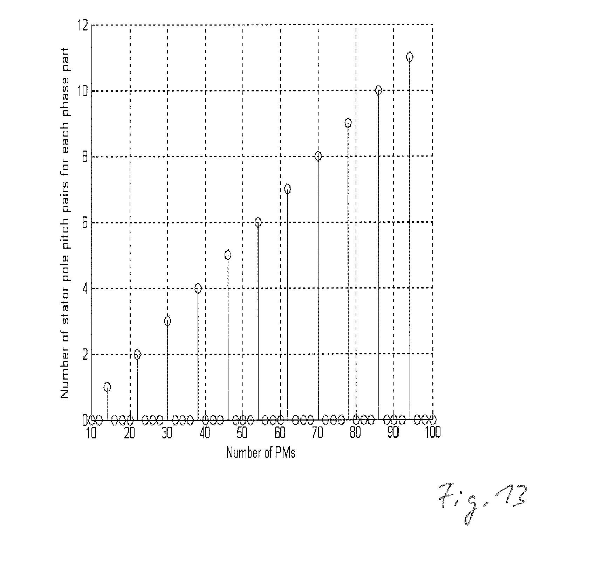

The split 2-phase distributed windings construction of a TFM 70' having a rotor 72 and a stator 74' comprising split stator phase units 76a, 76b, 78a, 78b is shown as top view for 58 poles in Fig. 12 and the suitable number of PMs is shown in Fig. 13.

The distances between the stator phase units have been chosen to allow feasible spaces between the windings as found by (10):

$$\delta_{2\phi\text{-}S} = \theta_{2\phi} + q \times \tau_p \qquad (10)$$

where $q$ = 0, 1, 2,..., P.

The phase span for each part of 2-phase machine can be found out by applying (11). This equation assumes that each phase of the two phases has been divided into two parts:

$$\Theta_{2\phi\text{-}S} = \frac{360^o - 4 \times \delta_{2\phi\text{-}S}}{4} \qquad (11)$$

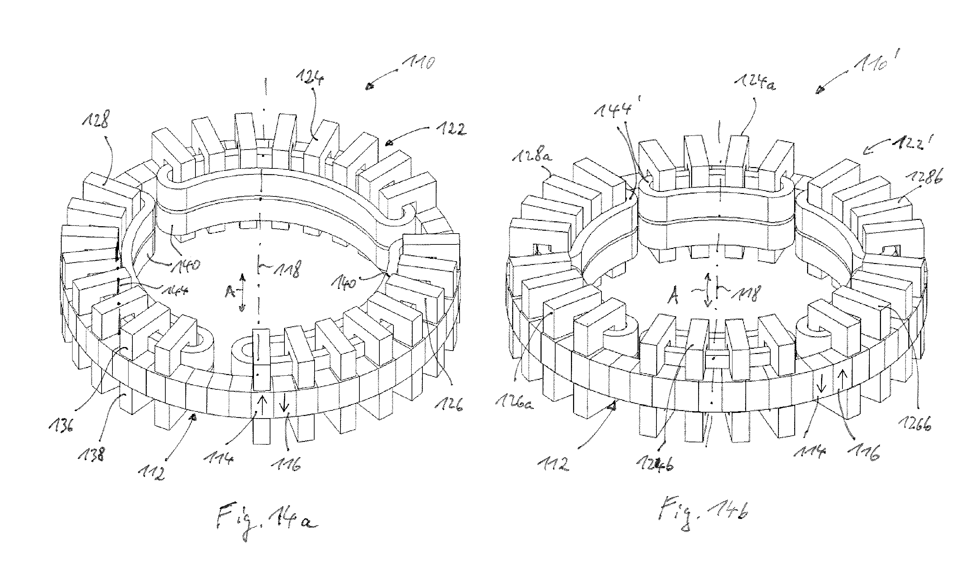

Embodiments of a surface permanent magnet (SPM) TFM according to the present invention are shown in Fig. 14. Fig. 14a shows a 3-phase SPM-TFM 110 with full windings and Fig. 14b shows a 3-phase SPM-TFM 110' with distributed windings. The end-windings will add a significant effect to the leakage inductance of SPM-TFM. Said SPM-TFMs 110, 110' comprise a rotor 112 comprising a plurality of (here 56) permanent magnet elements 114, 116 of opposite magnetisation direction in axial direction which are alternately coaxially arranged around a rotation axis 118. Contrary to the FC-TFM the SPM-TFMs 110, 110' the rotor 112 does not comprise rotor poles between the permanent magnet elements 114, 116. The TFM 110 further comprise a stator 122 comprising two or more (here three) stator phase units 124, 126, 128 coaxially arranged around said rotation axis 118, wherein said stator phase units 124, 126, 128 each have the form of sector of a ring arranged at different angular sectors around said rotation axis 18 and each have a number of stator teeth 136, 138 facing said rotor 112 and wherein said stator phase units 124, 126, 128 substantially form a stator ring. Still further, the TFM 110 comprises a number of stator windings 140 wherein the number of said stator windings 140 corresponds to the number of stator phase units 124, 126, 128, wherein each stator winding 40 is formed as a closed loop, which is arranged at the same angular sector as an associated stator phase unit 124, 126, 128 and surrounds at least part of the associated stator phase unit 124, 126, 128. The closed loop of each stator winding 140 is arranged about an individual central loop axis 144 arranged in axial direction A.

In the SPM-TFM 110' each of the three phase units of the stator 122' is divided into two stator phase sub-units 124a, 124b, 126a, 126b, 128a, 128b, and there are six windings 144' provided in total.

It shall be noted here that rotating magnets, as used in the rotor of the proposed TFM, can be modelled with a complex current sheet and using the convective-diffusion equation for the translation motion, through which a fast steady-state model is obtained as described in J. Bird and T. A. Lipo, "Calculating the forces created by an electrodynamic wheel using a 2-D steady-state finite element method", IEEE Trans. Magnetics, Vol. 44, No. 3, pp. 365-372, March 2008.

In order to ensure the operation of the machine, two small FC-TFM machines have been simulated with number of poles of 80. The best selection of the number of poles will be stated through running several finite element (FE) simulations and examining the torque density productivity through calculating the torque constant. In order to achieve strong magnetic fields for small machine volume and weight, rare earth permanent magnets are used (e.g. NdFeB) in the designs.

Simulations have shown that the flux density of the stator poles in one phase will be of a higher value than those of the other two phases since the peak value of the magnetic field of the current for this phase that supports the magnetic field of the PMs, which presents at the mechanical position of $0.5\tau_p$.

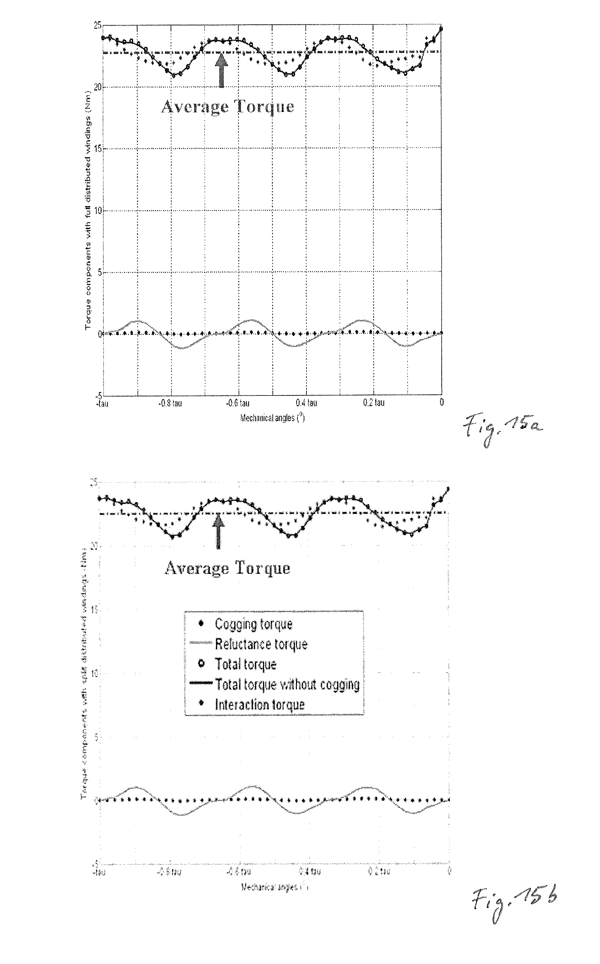

Cogging torque due to attraction forces between active PMs and iron parts in the stator, reluctance torque, due to saliency facing the air gap, interaction torque due to interaction between the magnetic fields of PMs and armature current are the torque components of the TFM, which are shown in Fig. 15. Fig. 15a shows the average torque for full winding structure is almost the same as its corresponding value for split phase structure (22.75 Nm), which is demonstrated in Fig. 15b. This is obviously the result, because the same electric loading of full winding case is applied in split winding case study.

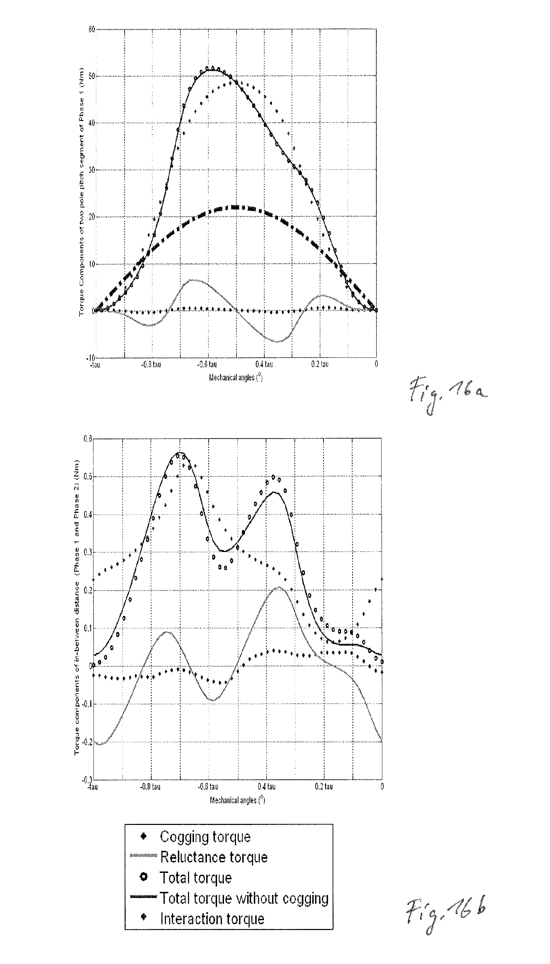

Other simulations have been carried out for only $2\tau_p$ for each phase with Flux3D Software from Cedrat. Since the software will calculate the torque for only $2\tau_p$ and then it will apply a factor of periodicity, it is possible then to divide the output torque from simulation by number of pole pairs to get a resultant torque for only $2\tau_p$. Fig. 16 plots the torque components over $1\tau_p$ of one phase for complete 80 poles as the machine has no distances between the phases. Since each phase in full winding structure covers $12\tau_p$, therefore, the torque of $2\tau_p$ will be scaled by 12. This process is repeated for each phase. The simulations of in-between distances have also been taken into account and plotted in Fig. 16; however, it should be scaled.

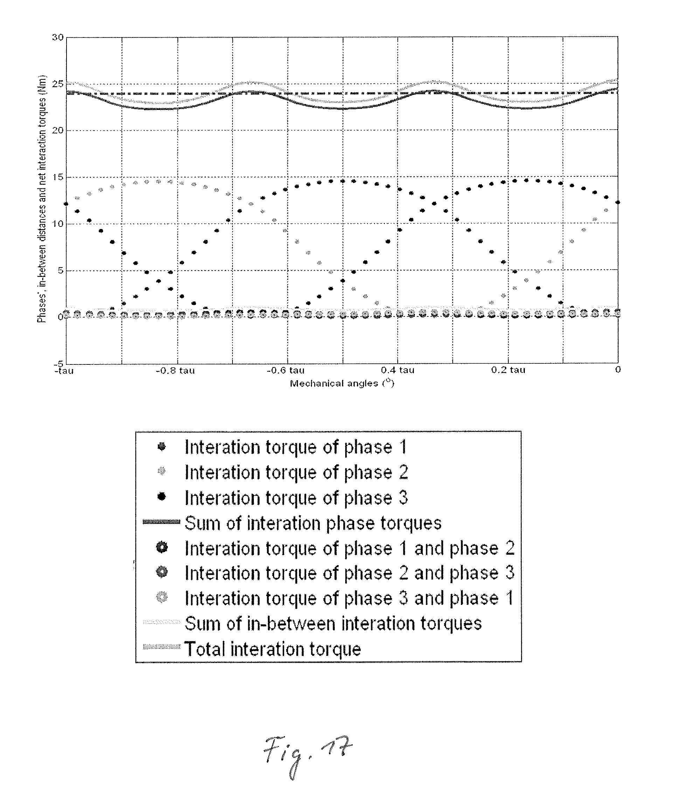

Adding the torques for the three phases including the torques due to distances between the phases after scaling gives average torque of $\approx 23.5$ Nm, which appears to be similar to that generated for the whole machine simulation as shown in Fig. 15. It is worth to be mentioned here that the distances between the phases have no big influence on the generated output torque, which can be clearly deduced from Fig. 17. The effect of these distances on the torque is only addition of $\approx 1\%$ of peak value of total average torque. As it shown the summation of phases' torques and the summation of the phases' torques with the in-between phases' torques are almost of similar values. The interaction phase torque components are calculated and plotted in Fig. 17.

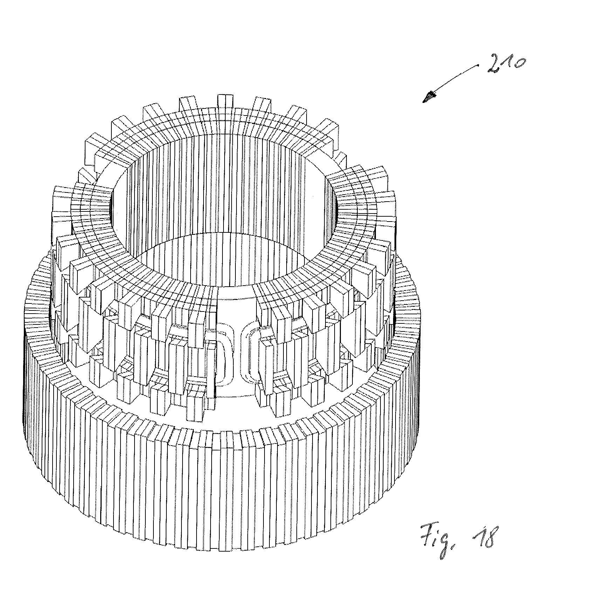

The small TFM explained above is redesigned for big sized TFM suitable for mounting as in-wheel motor. The machine is constructed of a material with a high permeability of linear BH characteristics and has a total diameter of 240 mm, $D_{out}$, $\tau_p$ of 11.7 mm and an air gap length of 0.7 mm. The machine 210 is shown in Fig. 18. Computer memory of 8 GB will not facilitate the simulation of the whole machine. Therefore, only $2\tau_p$-simulations have been conducted and the mathematical operations have been applied to get the output torque of the whole machine. A two pole pitch segment is shown in Figs. 5 and 6.

In an embodiment the machine is excited with 3-phase sinusoidal current. The stator poles face the rotor poles at a position, where the current value has been kept too small. At this position the stator poles reach high values of flux density of $\approx 2.1$ T. The maximum current is applied after a mechanical displacement of $0.5\tau_p$. At the position of high current, the stator poles flux density reaches values around $\approx 3.0$ T. The shoes of stator poles are of trapezoidal shape to increase the stator pole area facing the air gap which causes a remarkable increase in stator core back flux and that will in consequence improves the torque constant, $K_T$, which is a function of peak value of armature current, $I_{Peak}$, cosine of torque angle, $\cos(\theta_t)$ and average torque, $T_{av}$, given by (12):

$$K_T = \frac{T_{av}}{I_{Peak} \times \cos(\theta_t)} \qquad (12)$$

or in other format,

$$K_T = \frac{p}{2}\lambda_{mPM} = p(p\Phi)K_1 \qquad (13)$$

where $p$ = number of pole pairs;
$\Phi$ = flux per pole;
$K_1$ = leakage flux coefficient.

The torque constant is a factor which directly reflects the torque production capability determined by PM flux and geometry of motor. The value of $K_1$ is ratio of flux entering the bottom part of the C-core and the flux in the air gap per pole. It is basically a function of the number of pole pairs and geometry of the motor. An interesting remark in this equation is that if the pole number has predominant effect on the torque production capability then the torque density will increase with the increasing pole number and if $K_1$ has the predominant effect, then increasing the pole number will result on decrease on $K_1$, therefore, reduction on average torque will be a consequence result. Thus, a specific number of pole exists which will allow maximum torque production capability for a given volume of a machine. Note this value should also match those values of pole number that appears on Fig. 7 for 3-phase full winding construction.

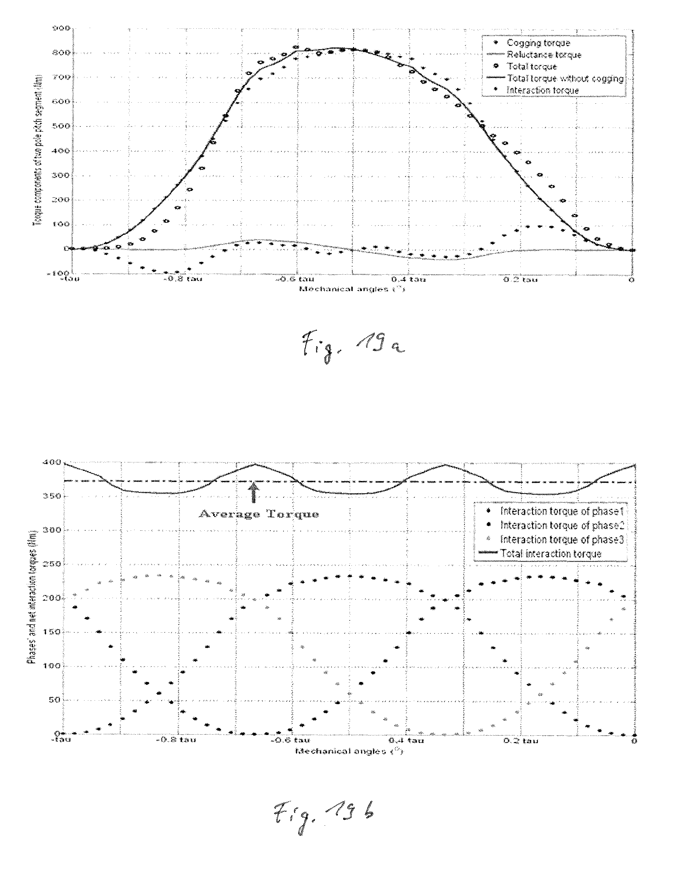

The magneto static simulation has been extended to obtain the torque produced by the $2\tau_p$ segment as shown in Fig. 19. The torque components over $1\tau_p$ period are plotted in Fig. 19a. These torques' components are plotted as there are no distances between the phases and as the machine is a periodical machine, symmetrical around the axial axis.

The torque components are calculated for one segment of $2\tau_p$. After applying numerical scaling and eliminating the effect of the distances between the stator phases, Fig. 19b is obtained. The interaction phase torque is, as shown, of sinusoidal waveform. The interaction phases' torques are shown, where each phase winding covers mechanically $16\tau_p$.

The average 3-phase torque is calculated to be 372 Nm as shown in Fig. 19b. This value found to be the same as when split winding structure is utilized. Note that that x-axis in the figures is plotted as a percentage of the pole pitch which is labelled as 'tau'.

In the above, two different structures of 3-phase FC-TFM based on distributed windings have been described and modelled via FEM. Other different possible structures have been pointed out such as 2-phase FC-TFM and 3-phase SPM-TFM with full winding and split phase structures. Through locating the windings around the stator, the axial length of the machine will be reduced and the output torque will be of the same value as that obtained when the phases located after each other. The mechanical stability can be assured by splitting the phase into several segments; as the same torque will be achieved by full winding construction as well as by split winding structure. Since it is difficult to simulate a whole structure of a big machine, therefore, a small scaled machine has been developed and simulated. It has been verified that Flux3D software can be used to simulate big sized machines of non-periodical structures. The torque produced from the whole structure can be deduced via simulating only two pole pitches, and a distance between the phases.

Following mathematical scaling applied to the results of these simulations, the torque waveform for the whole machine can be derived. Such approach will reduce the simulation run time and therefore, it has efficiently been used to get the output torque waveform for the big size in-wheel motor. It is recognized through simulation of the distances between the phases that they will not have a big influence on the value of the average magnetic static torque. Therefore, the inter-distances between the phases are suggested to be constructed of non-magnetic material such as aluminium and might be utilized to locate the cooling system of the machine.

As explained above flux concentrated permanent magnet (FCPM)-TFMs are selected as promising machines for direct drive in-wheel motors. Although this type of machines have still problems of noise due to high cogging torque that cause effective ripples in the torque waveform. Different structures of FCPM-TFM have been proposed, designed and compared by a number of authors to reduce the mechanical complexity in the structures of TFMs, which is a major problem (see e.g. Bang, D.; Polinder, H.; Shrestha, G.; Ferreira, J. A.: Comparative design of radial and transverse flux PM generators for direct-drive wind turbines, 18th International Conference on Electrical Machines, ICEM 2008, Vilamoura, Portugal, pp. 1-6, Sept. 2008).

Different materials have been implemented in the constructions of 3D-flux path pattern machines, i.e. TFMs. Soft magnetic composite (SMC) is considered to be the best suitable material, since it allows the 3D flux passage. This phenomenon will not be shown during using magnetostatic simulation if the lamination effect is not taken in consideration. The electric steel shows better results than SMC, since it is considered during the simulation as bulk steel and the insulation distances between the laminations have been incorporated. When a machine is manufactured in a laminated structure, it is important to discuss the eddy current losses as well. Conduction eddy currents within magnetic lamination are negligibly small when their thickness is much thinner than the skin depths of interest. However, as the thickness of the insulation between them is reduced, eddy currents can circulate between laminations via the displacement current flow through the insulator. The eddy currents will cause delay in magnetization switching and an appreciable drop in the remanence as the coercivity remains unaltered.

In Webb, B. C.; Re, M. E.; Russak, M. A.; Jahnes, C. V.: Interference resonances in the permeability of laminated magnetic thin films, Journal of Applied Physics, Vol. 68, No. 8, pp. 4290-4293, Oct. 1990 the laminations are modeled as an anisotropic effective medium and their effective permeability from the coupled Maxwell's equations in differential form has been computed. An equivalent circuit model is developed in which the effect of displacement eddy currents is included in the magnetic response (see Walser, R. M.; Valanju, A. P.: Displacement Eddy currents in Magnetic laminates, IEEE Trans. Magnetics, Vol. 2, No.5, pp. 2280-2282, Sept. 1992).

It is necessary to develop algorithms when the study in magneto-static is to involve the effect of lamination. In this case, an algorithm capable of solving the magnetostatic equations Maxwell's equations is required. This method does not require a displacement technique, is efficient and accurate enough to give a good representation of the electromechanical characteristics of the machine.

For these reasons, it has been found necessary to extend the algorithm; models have been developed, embracing the lamination effects on machine performance. This algorithm is based on the use of complex phasors associated with an equivalent magnetization curve. The subroutine USR_DBDH from Flux3D, which allows the consideration of lamination without having to define the geometry of the sheets, is tested. Three different models are tested. Therefore, the materials can be modelled with one of the algorithms, which will allow simpler geometry with fewer nodes. The aim of this study is to assess the validity of this subroutine in considering its effectiveness on the production of the torque through the magnetostatic evaluation.

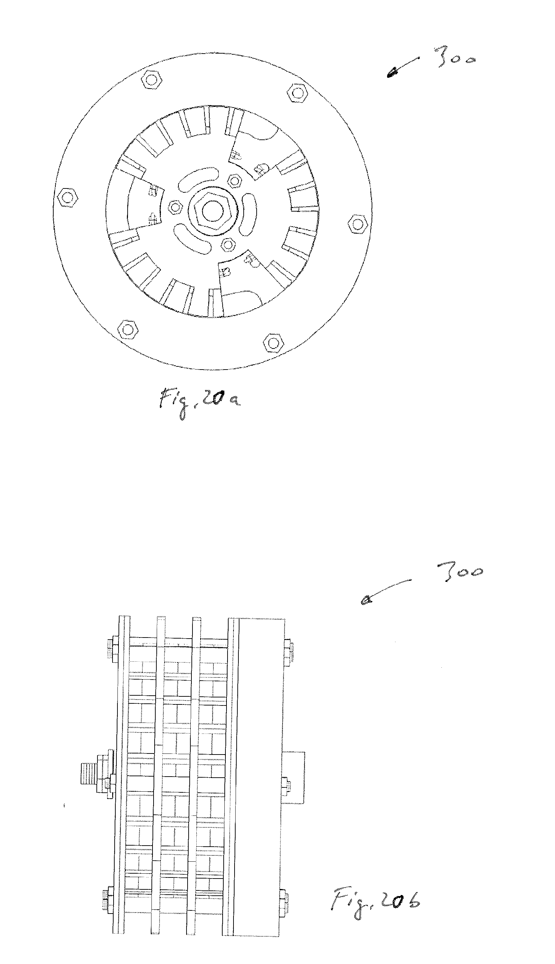

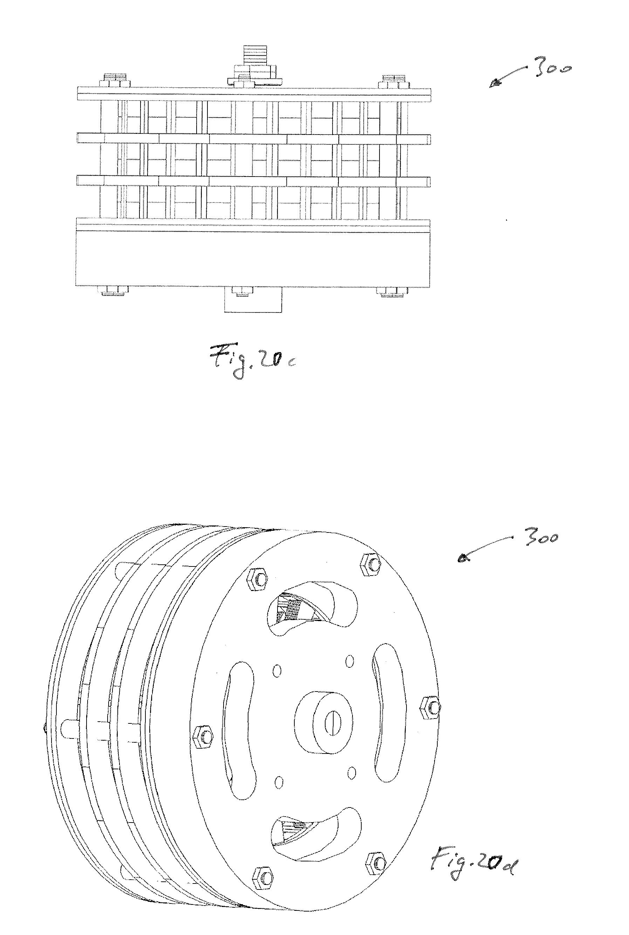

In an implementation the designed three phase FCPM-TFM with distributed windings is of an air gap diameter 82.38 mm and has an air gap length of 0.38 mm. The axial length of the machine is 40 mm excluding the mounting layers. A first angle projection of the motor 300 is shown in Fig. 20, wherein Fig. 20a shows a front view, Fig. 20b shows a side view, Fig. 20c shows a plan view, and Fig. 20d shows a perspective view.

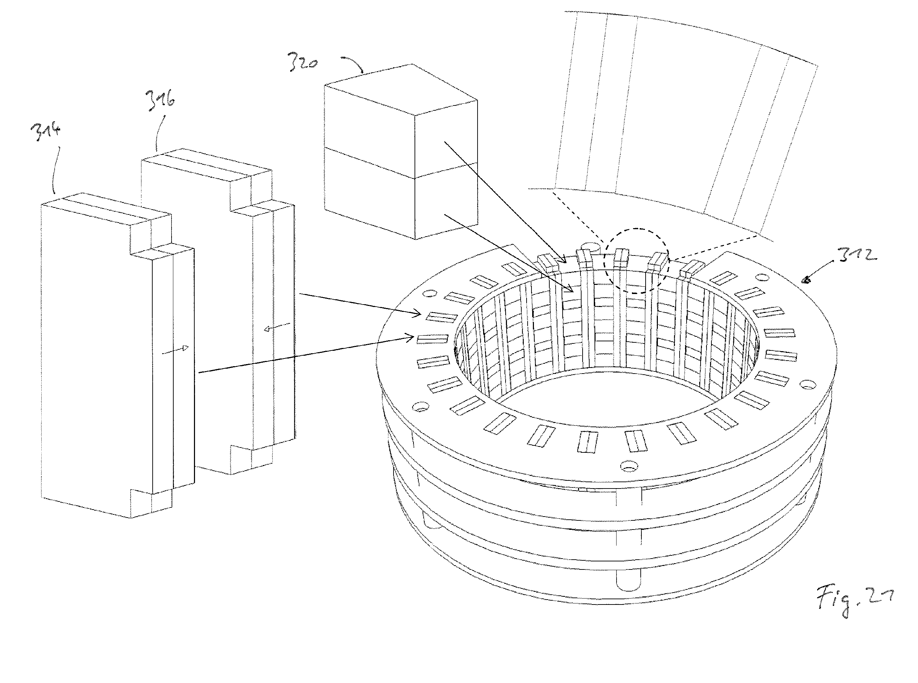

The permanent magnets (PMs) are of parallelogram shape from NdFeB and are manufactured in a special form, where the edges have been cut, for the mounting process. The number of the PMs is 26. Aluminium discs have been implemented to hold the PMs and the steel poles together. Rotor poles are of steel and formed in trapezoidal shape. Fig. 21 shows a rotor 312 of the motor 300, illustrating that the air gap surface will not be mechanically smooth due to different shapes of the edges for both the PMs 314, 316 and rotor poles 320.

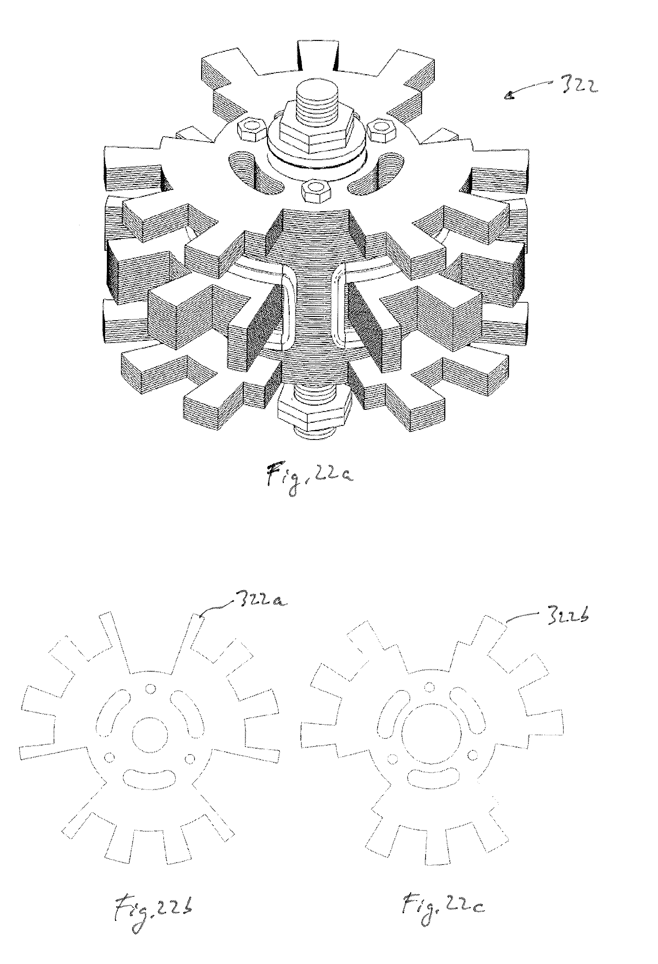

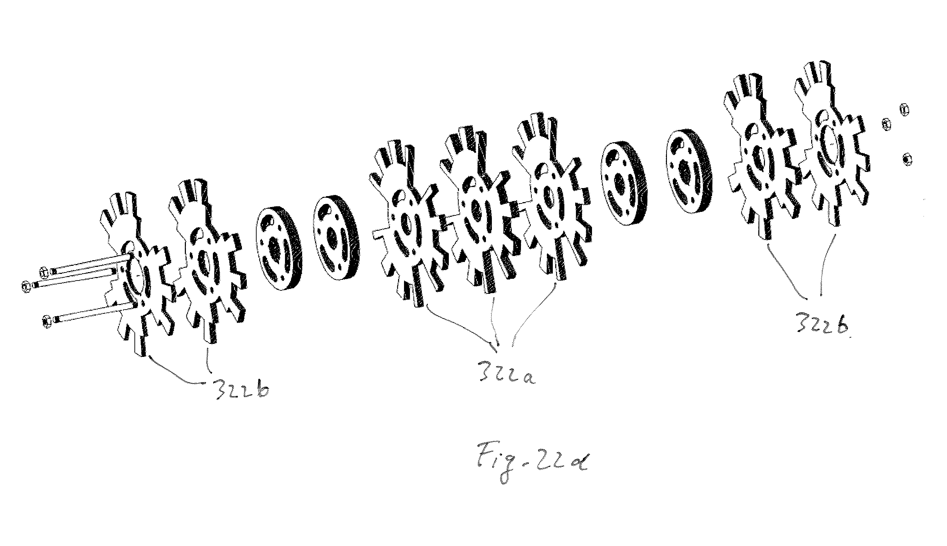

The stator 322 of the constructed FCPM-TFM is built in laminated structure as shown in Fig. 22, wherein Fig. 22a shows the stack of laminations 322a, 322b, Fig. 22b shows a middle lamination 322a, Fig. 22c shows a top lamination 322b, and Fig. 22d shows an exploded view of the stack shown in Fig. 22a. The laminations are of non-oriented grain electric steel M270-50A of thickness 0.5 mm with a stacking factor of 0.98. The laminations are cut by using laser technology with a tolerance $\pm$ 1/20 mm and are of different shapes. To absorb both radial and axial loadings, ball and needle bearing have been used on both sides of the shaft, respectively. Conductive grease from the manufacturer Smart-Grease Nye with 300 ohm.cm volume resistivity is recommended as it has a good effect in reducing the induced currents in the bearings and shaft. The machine is cooled by forced air flowing axially through the machine and via the holes located on the laminated stator and the rotor housing.

Three multi-turns is so-called saddle phase windings, wound around the yoke. Each phase consists of nine layers; each of them has nine multi-parallel turns to improve the fill factor. Since the yoke is shorter than the active axial length and even the axial surfaces are active in the torque production, this design has short end-windings. The end-windings have been shown of small effect on the torque production, where these areas can be used for other purposes, because the phases are proved to work independently. The end-windings are approximately 77% of the active length in the presented design. The input current is set to 24 A peak value.

A model of the electric steel M270-50A magnetizing BH-curve has been implemented for the laminated structure of the stator. The model is designed by using (14).

$$B(H) = \mu_o \cdot H + J_s \cdot \frac{H_a + 1 - \sqrt{(H_a + 1)^2 - 4H_a (1-a)}}{2(1-a)} \qquad (14)$$

where, $H_a = \mu_o \cdot H \cdot \frac{(\mu_r - 1)}{J_s}$,

B and H is the magnetic flux density (Tesla) and the magnetic field strength (A.t/m), respectively, $J_s$ is the saturation level in Tesla, $a$ is the knee adjusting coefficient of the material BH-curve, $\mu_r$, and $\mu_o$ are the relative permeability of the material and of the air, respectively.

Three structural models for the laminations have been implemented in this section in order to validate the subroutine which comes with the software:

Model (1): Through introducing air volumes between the laminations. This approach requires fine mesh in these air volumes, which are of 0.01mm axial length, that correspond to the insulation between the laminations.
Model (2): Insulation volumes have been virtually introduced between the laminations, taken into consideration a stacking factor of 0.98. This model will have fewer problems regarding the size of the mesh elements, though the laminated structure exists.
Model (3): No laminated structure has been performed. The effect of laminations is considered by the definition of the material. Problems of meshing many volumes will be significantly reduced, despite the effect of lamination has been taken into account.

The analyzed regions are reduced to a half due to the symmetry. Only two pole pitch sections are shown. The thickness of the insulation is 0.005 mm per side for each lamination, while the thickness of the lamination is 0.5 mm. Consequently, very dense mesh is required, which can not be acceptable for the 3-D analysis from the point of computer resources. Therefore, Model (3) is introduced resulting in a reduced number of finite mesh elements less than ≈ 35%.

In order to compare the effect of these subroutines with the case, when the laminations of the machine are not considered, Model (0) has been constructed and shown in this study. It should be pointed out that certain FE- formulations should be adjusted as the ferromagnetic and magnetic regions are defined based on reduced or total scalar potentials.

Further, the behavior of the complete construction of the FCPM-TFM has been investigated. The mesh will be poor, if the insulation volumes are included in the laminated structure. As a consequence, Model (1) and (2) have not given the actual nature of the flux density and are not shown in this comparison. Only Model (3) has been applied to analyse the full machine, in comparison to Model (0). The three phases are excited by three phase current source of a phase shift 120° with a magnitude of 24 A.

Obviously, Model (3) shows higher level of flux density in the three positions, since the stack factor has been considered. This implies that considerable eddy current loss is generated at the insulated layers, which corresponds to the contact surfaces of the active material and required to be further investigated. Note that the BH-model works reasonably for high flux densities.

The correct model of the magnetizing curve plays an important role in predicting the flux density distributions, particularly, when the model predicts both the linear and saturation portions of the magnetizing curve correctly. The flux densities are expected to be lower than what is shown above, since applied BH-model proves to work correctly, when the values more than 1 Tesla, in comparison to the manufacturer BH-characteristics. Therefore, another model can easily be set for studying the linear cases.

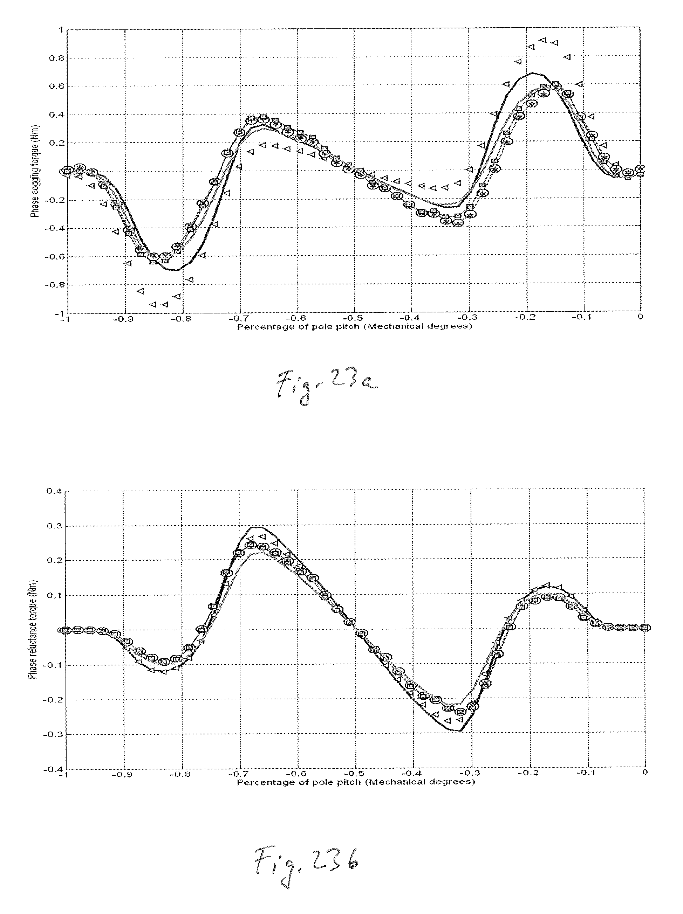

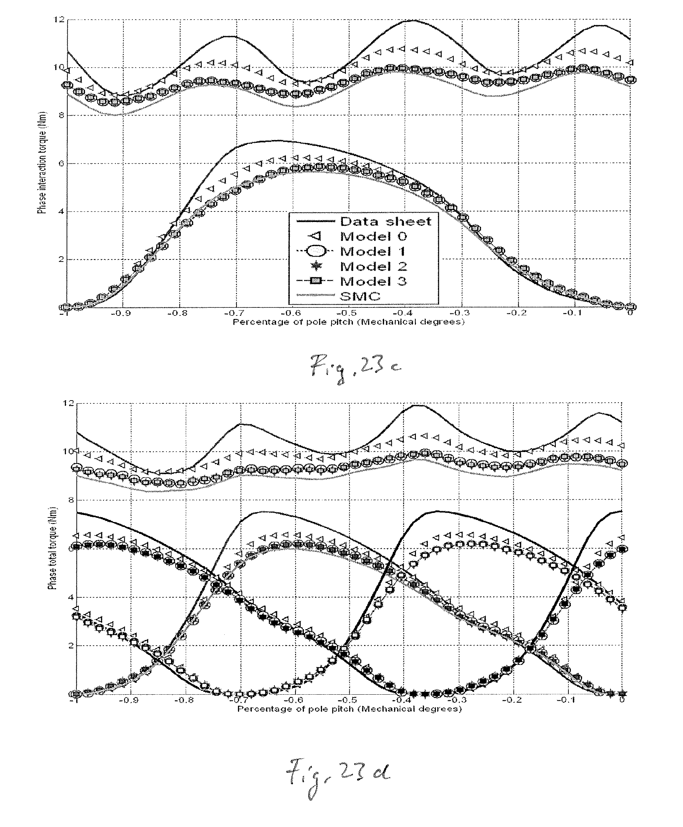

Computations of electromagnetic torque are shown in Fig. 23 over one pole pitch period for phase quantities. Fig. 23a, Fig. 23b and Fig. 23c illustrate the cogging, reluctance and interaction torque components, respectively. The three torque components of the three lamination models agree with each other. However, Model (0) shows higher value than the other models, while the utilized data sheet study gives the highest.

Similar observation can be deduced from Fig. 23d for the total phase torque. A reduction of 6% in the total torque is caused due to the laminations. Having data sheet BH-curve considered, the output torque is expected to be reduced by almost this percentage.

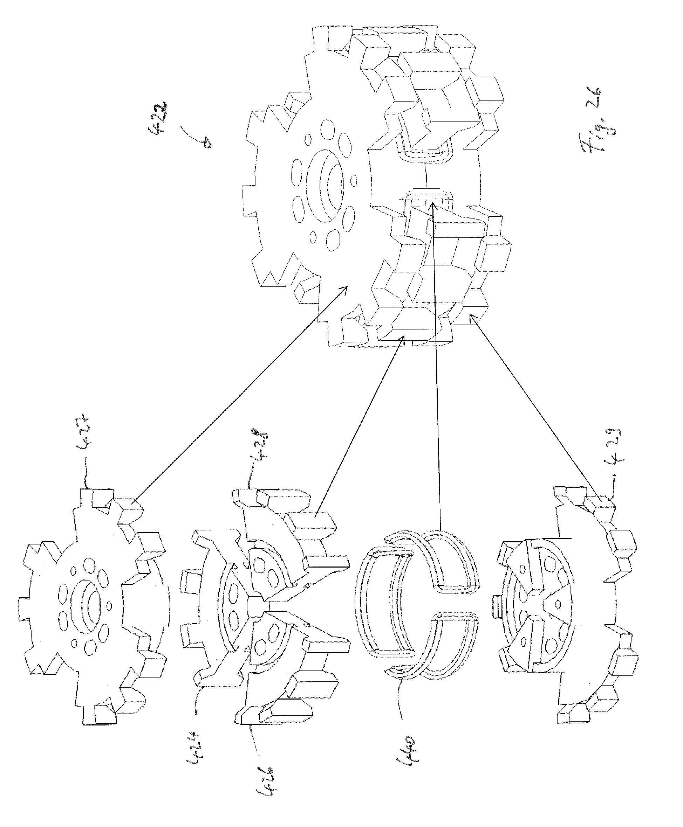

Another embodiment of a stator 422 for a TFM is shown in Fig. 26. In this embodiment the stator 422 is built with SMC material (Soft Magnetic Composite). With this special pressed SMC structure of the stator the output torque of the machine can be increased by 25% compared to the laminated steel stator 322 as shown in Fig. 22. In such a stator construction from SMC material the (mechanical) placement of the saddle windings 440 in each stator segment 424, 426, 428 is rather easy, while it is more difficult in case of the laminated structure.

The stator 422 is particularly pressed by using SMC material in three segments 424, 426, 428 for the three-phase winding. The top and bottom parts 427, 429 are also of SMC material and are of the same construction. The placement of the saddle windings 440 is done, as seen from Fig. 26, by pushing the winding packet in each stator segment 424, 426, 428 starting from the shaft end (while impossible from outside), or wounding each sector simply by a winding machine.

The effective area of the stator poles that faces the air gap has been increased by 40%, which adds a significant role in the increase of the torque value by 25%. This can not be achieved by the laminated structure. Furthermore, SMC material will reduce the eddy current losses as well and will allow 3D-flux fields.

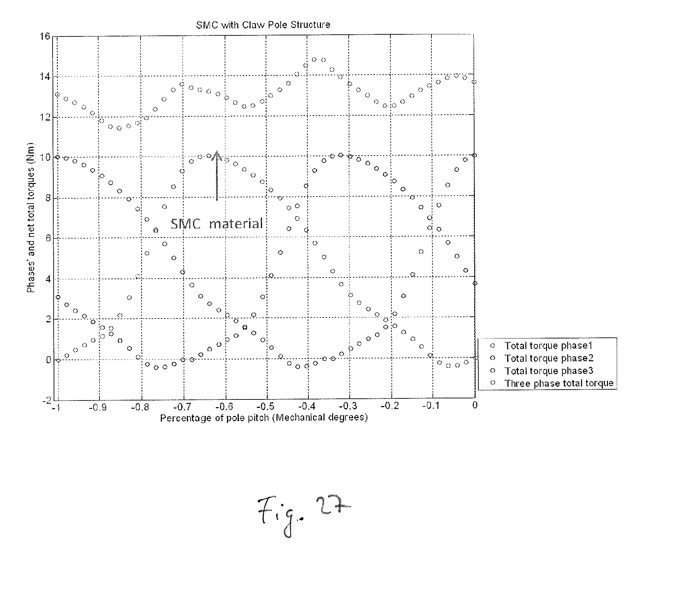

The torque waveforms prove this increase of torque productivity as shown in the diagram depicted in Fig. 27.

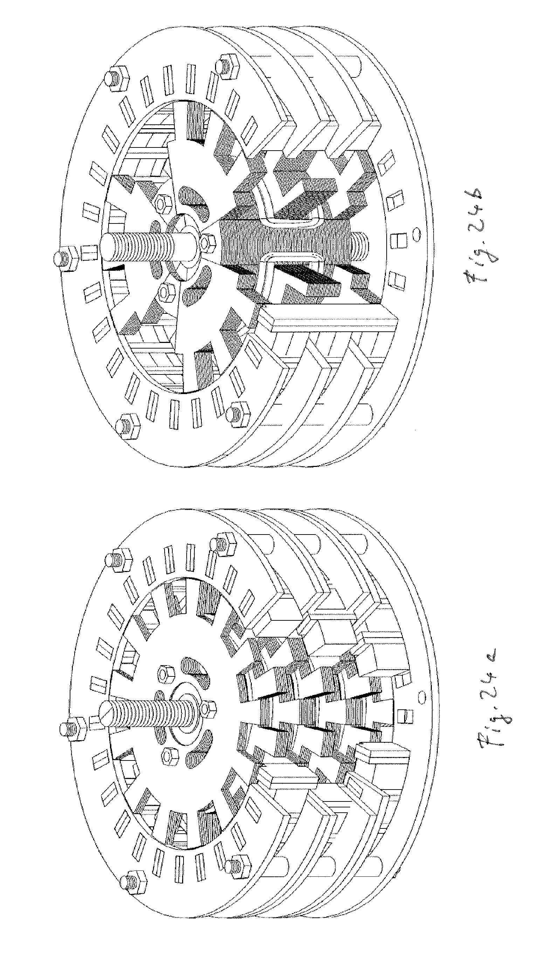

In the above, continuation of the previous work in which the FCPM-TFM in segmented winding structure that can give better results compared to a conventional layered three phase machine, has been further investigated with considering the effect of the laminated structure as can be seen in Fig. 24, wherein Fig. 24a shows a realisation with 3-phase layered structure and Fig. 24b shows a realisation with 3-phase distributed structure. Three lamination models have been studied and the validity of the models is verified.

Through implementing the subroutine USR_DBDH from Flux3D software, a model for the magnetising curve will be developed, while three points should in advance be provided, i.e., saturation level, knee coefficient and relative permeability with specifying the direction of lamination and the stack factor. Since the direction of laminated structures can easily be included by the user, this will facilitate the study of different direction of laminations while working in magnetostatic application.

The models provide reasonable accuracy; and the value of the torque of the laminated structure reaches ≈ 94% of the unlaminated one. SMC materials have revealed almost the same output torque as the steel, when the laminations are considered. It is clear that SMC could have produced better torque if the stator poles are constructed with larger surfaces that face the air gap, which is difficult in case of laminated structure. Although the calculated results slightly underestimate the performance, as the material BH-model should agree with manufacturer data sheet data, the tendencies agree well with the original model.

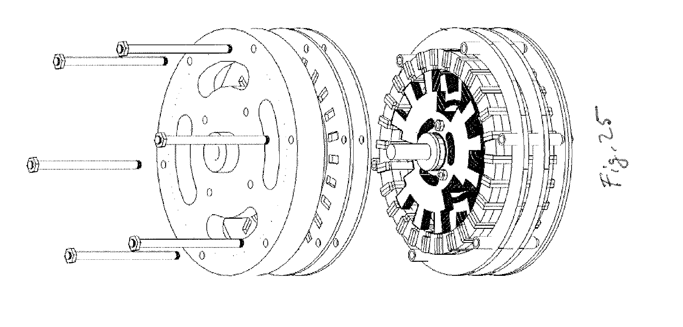

The distribution of the windings around the stator breaks the constructional symmetry in FCPM-TFM that is built in segmented configuration. Due to this asymmetry and since the generated magnetic forces on a stator is rotating as a rotor rotates; its resultants exist in the form of torque and unbalanced magnetic force, where the later causes the ripples on the torque waveform and therefore, increases the level of noises in the machine. The unsymmetrical segmented structure of the FCPM-TFM is shown in Fig. 25, where the maximum and minimum positions of the normal forces acting on outer rotor with respect to the stator are illustrated.

In the following, the characteristics of torque and unbalanced magnetic forces in rotational unsymmetrical segmented FCPM-TFM with distributed windings, which achieves high average torque and low cogging torque at the same time, is investigated through solving Maxwell stress tensor. The normal and axial magnetic force components for no-load and load conditions are derived. The estimated no-load induced voltage is shown to agree with the practical results obtained from a prototype execution in generator mode operation.

Total forces are normally calculated via virtual work based on partial derivatives of the magnetic co-energy with respect to rotor position, Maxwell stress tensor based on magnetic field components and magnetizing current and magnetic charge methods, which are theoretical equivalent to Maxwell tensor method. The local forces are computed by Lorenz formula $J \times B$ in conductors and $-\frac{1}{2}H^2$ grad $\mu$ in magnetized materials.

As the magneto static field generated by TFM is governed by the set of Maxwell's equations, therefore, these equations can be solved using FE- method. FLUX3D, an FE-solver for magnetic fields from Cedrat, has been used to calculate the magnetic flux density, B. A non-uniform distributed force per unit area at the interface between two materials can be calculated using the Maxwell stress tensor. In the following an overview of the applied method is illustrated.

Torque analysis using Maxwell stress tensor $\sigma_{ij}$ computes the local stress at all points of a bounding surface and then sum the local stresses via using a surface integral to find the overall force. In rotating electric machines, this calculation requires expressing the vector components of the air gap magnetic field in cylindrical coordinates, $B_r$, $B_\theta$ and $B_z$ as shown in (15):

$$\sigma = \begin{bmatrix} \dfrac{1}{\mu}B_r^2 - \dfrac{1}{2\mu}\left|\vec{B}\right|^2 & \dfrac{1}{\mu}B_rB_\theta & \dfrac{1}{\mu}B_rB_z \\[2em] \dfrac{1}{\mu}B_\theta B_r & \dfrac{1}{\mu}B_\theta^2 - \dfrac{1}{2\mu}\left|\vec{B}\right|^2 & \dfrac{1}{\mu}B_\theta B_z \\[2em] \dfrac{1}{\mu}B_z B_r & \dfrac{1}{\mu}B_z B_\theta & \dfrac{1}{\mu}B_z^2 - \dfrac{1}{2\mu}\left|\vec{B}\right|^2 \end{bmatrix}\vec{n} \qquad (15)$$

where $\overline{n}$ is a normal unit vector pointing outside a surface area $S$ and equals [100]. $\mu$ is the permeability of the medium. $|\overline{B}|$ is the magnitude of the flux density vector, $\overline{B}$.

By substituting the values of the unit vector and $|\overline{B}|$, the evaluated matrix will have the form introduced in (16):

$$\sigma = \frac{1}{\mu}\begin{bmatrix} B_r^2 \\ B_r B_\theta \\ B_r B_z \end{bmatrix} - \frac{1}{2\mu}\begin{bmatrix} B_r^2 + B_\theta^2 + B_z^2 \\ 0 \\ 0 \end{bmatrix} = \begin{bmatrix} \sigma_r \\ \sigma_\theta \\ \sigma_z \end{bmatrix} \qquad (16)$$

Along the air gap, the normal and tangential traction for the tooth face or on a surface at the center of the air gap are:

$$f_r \approx \sigma_r = \frac{1}{2\mu_{air}}\left(B_r^2 - B_\theta^2 - B_z^2\right) \qquad (17)$$

$$f_\theta \approx \sigma_\theta = \frac{1}{\mu_{air}} B_r B_\theta \qquad (18)$$

$$f_z \approx \sigma_z = \frac{1}{\mu_{air}} B_r B_z \qquad (19)$$

where $f_r$, $f_\theta$ and $f_z$ are the force components in normal, tangential and axial directions, respectively.

The resultant of magnetic force acting on the stator at one position is expressed by torque, T and unbalanced magnetic force $F_n$, as following:

$$T = \oint_S r \times f_\theta dS \qquad (20)$$

$$F_n = \oint_S f_r dS \qquad (21)$$

and the axial force can be estimated by (22):

$$F_z = \oint_S f_z dS \qquad (22)$$

The stator is built of non-grain electric steel M270-50A laminations. The permanent magnet (PM) are of sintered NdFeB with a residual flux density of 1.25 Tesla and a coercivity force of 1989 KA/m, with tangential magnetization direction as implemented in TFM that utilizes flux concentrating topology of construction. The current density of Y-connected winding is of 1.575 A.turn/mm$^2$ and of a total winding section area $\approx$ 100 mm$^2$. The radial length of the air gap and permanent magnet are 0.38, 10 mm, respectively. The radius of the stator is 41 mm and stator stack length is 40 mm. The gap between the phases is 36.923 degrees which corresponds to 2.667$\times\tau_p$. Other dimensions of the machine are shown in Table I.

TABLE I

| DIMENSIONS OF PROTOTYPE FCPM- TFM | | | | |
|---|---|---|---|---|
| **General Machine Dimensions (mm)** | | | | |
| Pole Number | Air gap diameter | Pole pitch, $\tau_p$ | Air gap length | Axial length |
| 26 | 82.38 | 10 | 0.38 | 40 |
| **Stator and rotor dimensions** | | | | |
| | | Height (radial) | Width (tangential) | Length (axial) |
| PM | | 10 | 4 | 40 |
| Rotir Pole | | 10 | 6 | 36 |
| Stator pole | Centre | 10.7 | 8 | 10 |
| | Sides | 10.7 | 8 | 5 |

(continued)

| Stator and rotor dimensions | | | |
|---|---|---|---|
| | Height (radial) | Width (tangential) | Length (axial) |
| Between Phases | 14.45 | 26.67 | 40 |
| Slot | 10 | 30 | 10 |
| Mounting layers | 30 | 42/72 (Inner/outer radius) | 3 |

During the prototype construction, it became evident that the air gap surface from the rotor side will be of non-smooth shape due to the existence of the trapezoidal rotor poles and the parallelogram shapes of the PMs in the outer rotor. Thus, a deleterious effect on both the detent torque and the magnetic flux variations will be expected.

Full axial model was required to analyze the rotational unsymmetrical motor, which did not have periodical boundary condition around the shaft. Since the magnetic flux is concentrated in the air gap, particularly at the corner of a tooth, it is necessary to have the fine mesh in the air gap and the tooth corners. The total number of nodes and volume elements are, 637384 and 464609, respectively.

The magnetic field produced as the rotor rotates, are observed as a series of magneto static fields, or quasi static magnetic fields. Two-dimensional grid in the middle of the air gap is placed, where the flux density components in cylindrical coordinates are plotted and used in the calculation of the force components. The average output torque and the output torque pulsations of PM motors depend on air gap flux density waveform produced by the magnets. This waveform is affected by magnet shape (arc and height), air gap length, number of poles, and the direction of magnetization of the magnets.

In order to get accurate knowledge of flux density waveform, the mesh should be relatively fine on the surface of the grid, so that it can correctly predict the flux density components. Precisely speaking, the magnetic flux density tangential component, $B_\theta$, has to be correctly estimated by FE- method, since it is of very high irregular shape when number of mesh elements is small, whereas the normal component is less sensitive to the discretization density and the axial is of a very small value that will not have much effect on the output values if it is ignored. The number of discrete elements on both θ- and z- directions of the grid are set to 400 elements.

Simulating half of the axial length of two pole pitch segment will give relatively correct prediction of the normal and tangential components of the flux density in the air gap, whereas the axial component will not be correctly estimated as the boundary conditions, in case of half axial length simulation, will be incorrect. Therefore, it is recommended to not apply the symmetry when calculating the axial component, though estimation errors will occur, as well as in calculation of the normal and axial force components, when Maxwell equations are to be utilized as a solving tool.

The back electromagnetic force EMF, $e$, at no-load condition is calculated using Faraday's law of electromagnetic induction based on the time variation of magnetic flux induced, Φ in the coil. The magnetic flux is obtained through integrating the flux density, $B$ on the cross-section surface of the N-turns coil, $S$, which has to be perpendicular to the magnetic flux path.

The time variation of magnetic flux is calculated considering constant angular velocity. Therefore,

$$e = -\frac{d\Phi}{dt} \tag{23}$$

$$\Phi = \frac{\partial W_m'}{\partial i} = \int_\Omega \bar{B} \cdot \bar{h}_o \, d\Omega \tag{24}$$

where, B is the flux density on cross section surface of the coil, ho is the field created by the coil in a vacuum, when carrying a current of 1 A and Ω is the study domain.

The magneto static study covered by FEM is divided in this context into two sections, where the flux density in the air gap is studied as well as their contributions on the force components are investigated.

The components of flux density in the middle of the air gap are expressed in radial, tangential and axial components, i.e. in cylindrical coordinates. The normal and axial components are of small values. It is also noted that with this configuration, there is a negligible interaction between phases regarding magnetic coupling. For the analysis, the zero degree position is defined at the rotor aligned position. The flux density profiles are symmetric across the surface of the stator tooth at the aligned and unaligned positions. For position values between the aligned and unaligned positions, the flux levels are unsymmetrical, with a slope that varies with rotor position and phase current. This agrees with the investigations of switched reluctance motors.

Since the product of the normal and tangential components is important, when Maxwell stress tensor is used, the product expressed in elementwise approach is shown too on the same plot. The results are very sensitive to discretization density and integration grid. This sensitivity is linked mainly to the very high irregularity of the small tangential magnetic flux density component. It is clear that normal component distribution is less sensitive to discretization density and the location of grid as well. The product of normal and tangential components is even more sensitive to discretization density and grid location than either component separately, which appears as a reassuring result, since it coincides with what has been indicated for the calculation over a closed contour.

The modulus of the flux density is minimum at the aligned position and they achieve maximum values in the air gap at the unaligned position. The tangential field component mirrored itself over the aligned position and it is hypothesized that this component for approximating Maxwell stress tensor is proportional to the gradient in the magnetic field magnitude. The normal and tangential flux density components will change for all cases, from odd to even functions, respectively.

Equations (20), (21) and (22) have been utilized to calculate the tangential, normal and axial forces. The axial force component is the same as its corresponding value obtained in Cartesian coordinate system.

The tangential force component in TFM is of three components, cogging, reluctance and interaction or commutating. The calculated torque components via integrating the product of the radial and tangential components of the flux densities in the middle of the air gap agree with the results obtained from FLUX3D software. The torque components can be depicted analytically from co-energy principle, when the iron and copper losses are ignored.

$$T_\theta \approx -T_{cogging}(\theta) + \frac{1}{\partial\theta}\sum_{k=1}^{m}\sum_{j=1}^{m}L_{k,j}(\theta)\cdot i_j \cdot \partial i_k + \sum_{k=1}^{m}\frac{\partial\psi_{PM_k}}{\partial\theta}\cdot i_k \qquad (25)$$

when linear case is considered, (25) will reduces into (26):

$$T_\theta \approx -T_{cogging}(\theta) + \frac{1}{2}\sum_{k=1}^{m}\sum_{j=1}^{m}\frac{dL_{k,j}(\theta)}{d\theta}\cdot i_j \cdot i_k + \sum_{k=1}^{m}\frac{d\psi_{PM_k}}{d\theta}\cdot i_k \qquad (26).$$

Since the tangential force component depends on the radial and tangential components of the flux density in the air gap, and half axial length simulation can correctly estimate these two components of flux density, thus, the torque is obtained from integrating the product of the radial and tangential components flux density over the area of a grid located in the middle of the air gap of half the axial length.

The normal magnetic force in the air gap produces the unbalanced magnetic resultant only for the rotational unsymmetrical design. The resultant does not exist in rotational symmetric design because the normal forces are canceled due to rotational symmetry. The normal forces can also be cancelled out by introducing segmented structure, where each phase is splitted into two parts facing each other. The forces are obtained via evaluating the integral in (17) over a full axial length grid.

The maximum position of the normal force clearly rises, when the rotor approaches the overlap position in one pole pitch, while the minimum position occurs at the same position, however, in the other pole pitch. A DC component of 0.375 N appears owing to the attraction forces at the aligned and unaligned positions of PMs. The normal forces are expressed in polar form as the rotor finishes $2\tau_p$ of one revolution period and the patterns are shown in the appendix for the no-load, currents, fields and total effect cases.

The existence of the axial magnetic forces is, in general, due to the variation of permeance of mutual and leakage flux paths. The axial force can be determined and can be defined as algebraic sum of the forces due to displacement of the rotor in axial direction. As the axial force decreases with the increase in the air gap length and due to the existence of the PMs in the rotor, which act as an air gap extension, it is expected that the axial magnetic force will be of small values, as the results indicate, though these may aggravate the damage to the bearing, therefore assessment of the axial forces is worthwhile. The nature of this component of force depends on the nature of inductance variation. In FCPM-TFM with distributed windings the axial force show higher results compared to the normal forces.

Generally, the torque in FCPM-TFM is proportional to the square of the modulus of the flux density in the air gap. The flux concentrating effect can be easily shown by replacing the steel poles in the rotor by air volumes. The out put torque with steel poles will be of $C^2$ times the torque produced as air volumes are considered instead their corresponding of steel. The constant, C is calculated from equivalent circuit of the machine as in (27):

$$\frac{B_{g(steel \rightarrow poles)}}{B_{g(air \rightarrow poles)}} = \frac{\mu_o \cdot h_{PM} + 2(l_g + l_{air})^* \mu_{PM} * K_M}{\mu_o \cdot h_{PM} + 2(l_g)^* \mu_{PM} * K_M} = C \qquad (27).$$

Only 5% of the mean length of air volumes that replaces the steel ones will be followed by the flux lines so that they find the minimum reluctance path to enter the stator.

The peak value of the torque reaches 10.45 Nm with steel poles, while with air poles, the torque reaches 3.27 Nm, which is of factor $\approx 3$, agrees with the result obtained from (27).

The induced flux in the coil is being calculated by the software via the utilization of (24). The induced flux waveforms due to PMs as well as due to the armature current are individually of relatively sinusoidal shape and of almost 180° phase shift. The no-load PM flux linkage waveform can be found by using core back flux by rotating the rotor for different positions. The introduction of the current has introduced a distortion of the flux waveform with a phase shift of $\approx 2°$ from the aligned position. The interaction of the rotor and stator fields has brought a waveform, with a dominant third harmonic level that causes this modulation effect.

Normally, for the no-load condition, the machine is not saturated or is about to saturate. The output from transient investigation is shown on the same plot for operating speed of 100 rpm, which verifies the magneto-static result. Experimental result shows as the machine is driven to $\approx 145$ rpm that the induced voltage is quite favorably with what is found from FEM.

In the above, finite element modelling and analysis results are described that are performed during the design process of a high power density, FCPM-TFM having a radial air gap orientation and 3D- field configuration. The analysis include study of the magnetic forces, i.e. normal and axial force components in the machine that tend to excite undesirable mechanical modes resulting in acoustic noise.

The study shows that the tangential force component or the output torque can be easily estimated by placing a 2D- grid of half the machine axial length, in the middle of the air gap, and evaluating the integral of the product of the radial and tangential components of the flux density over the area of the grid. This method gives efficient results that are consistent with what Flux3D software reveals for the cogging, reluctance and commutating torque components.

In studying the normal and axial force components, a 2D-grid of the total axial length of the machine should be set under simulation, so that the boundary conditions can be set correctly. Otherwise, misleading results will be produced. In the study, end turn effects are neglected. The calculated induced voltage waveforms are compared with the measurements, and the comparison study shows the validity of the estimated values.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

**Claims**

1. Transverse flux machine, in particular transverse flux motor, comprising:

   - a rotor comprising a plurality of permanent magnet elements of opposite magnetisation direction alternately coaxially arranged around a rotation axis,

- a stator comprising two or more stator phase units coaxially arranged around said rotation axis and separated, wherein said stator phase units each have the form of sector of a ring arranged at different angular sectors around said rotation axis and each have a number of stator teeth facing said rotor and wherein said stator phase units form a closed stator ring,

- a number of stator windings, the number of said stator windings corresponding to the number of stator phase units, wherein each stator winding is formed as a closed loop, which is arranged at the same angular sector as an associated stator phase unit and surrounds at least part of the associated stator phase unit.

**2.** Transverse flux machine as claimed in claim 1, wherein the rotor, the stator and the stator windings are all arranged in a single layer.

**3.** Transverse flux machine as claimed in any preceding claim, wherein the two or more stator phase units are arranged such that the first stator tooth of a stator phase unit is mechanically displaced in angular direction by a mechanical displacement with respect to the first stator tooth of an adjacent stator phase unit, which mechanical displacement equals 360° divided by the number of stator phase units plus a small displacement factor, which is different for the different pairs of adjacent stator phase units.

**4.** Transverse flux machine as claimed in any preceding claim, wherein the stator teeth of the stator phase units are divided into a first teeth part and a second teeth part, the first teeth part being arranged, seen in axial direction, in the central area of the stator phase unit and the second teeth part being arranged, seen in axial direction, in the edge areas adjacent said central area.

**5.** Transverse flux machine as claimed in any preceding claim, wherein said stator phase units are subdivided into to or more stator phase sub-units which are alternately arranged about said rotation axis, wherein the number of said stator windings corresponds to the number of stator phase sub-units, and wherein each stator winding is arranged at the same angular sector as an associated stator phase sub-unit and surrounds at least part of the associated stator phase sub-unit.

**6.** Transverse flux machine as claimed in any preceding claim, wherein the number of stator phase units is in the range from 2 to 12, in particular 2 or 3.

**7.** Transverse flux machine as claimed in any preceding claim, wherein the rotor is arranged around said stator.

**8.** Transverse flux machine as claimed in any preceding claim, wherein the stator is formed by a plurality of laminated electric steel sheets arranged above each other in axial direction.

**9.** Transverse flux machine as claimed in any preceding claim, wherein the transverse flux machine is a flux concentrated transverse flux machine, wherein the permanent magnet elements have a magnetisation direction in radial direction and wherein the rotor further comprises a plurality of rotor poles, wherein a rotor pole is arranged between each two permanent magnet elements of opposite magnetisation direction.

**10.** Transverse flux machine as claimed in claim 9, wherein the closed loop of each stator winding is arranged about an individual central loop axis arranged in transversal direction.

**11.** Transverse flux machine as claimed in claim 9 or 10, wherein the two or more stator phase units are separated by distance elements and wherein said stator phase units together with the distance elements form a closed stator ring.

**12.** Transverse flux machine as claimed in any preceding claim, wherein the transverse flux machine is a surface permanent magnet transverse flux machine and wherein the permanent magnet elements have a magnetisation direction in axial direction.

**13.** Transverse flux machine as claimed in claim 12, wherein the closed loop of each stator winding is arranged about an individual central loop axis arranged in axial direction.

14. Transverse flux machine as claimed in any preceding claim,
    wherein the stator is formed from soft magnetic composite material.

15. In-wheel motor comprising a transverse flux machine as claimed in any one of claims 1 to 14.

Fig.1

Fig.2

Fig. 3

Fig. 4

Fig.5

Fig.6

Fig. 7

Fig. 8

Fig. 9

Fig. 10

Fig. 71

Fig. 72

24

Fig. 13

Fig. 14a

Fig. 14b

Fig. 15a

Fig. 15b

Fig. 16a

+ Cogging torque
⊶ Reluctance torque
○ Total torque
━ Total torque without cogging
✦ Interaction torque

Fig. 16b

Fig. 17

| Legend | |
|---|---|
| ● | Interation torque of phase 1 |
| ○ | Interation torque of phase 2 |
| ● | Interation torque of phase 3 |
| ▬▬ | Sum of interation phase torques |
| ◉ | Interation torque of phase 1 and phase 2 |
| ◉ | Interation torque of phase 2 and phase 3 |
| ◉ | Interation torque of phase 3 and phase 1 |
| ⋯ | Sum of in-between interation torques |
| ▭▭ | Total interation torque |

210

Fig. 18

Fig. 19a

Fig. 19b

Fig. 20a

Fig. 20b

Fig. 20c

Fig. 20d

Fig. 22

*322*

Fig. 22a

*322a*

Fig. 22b

*322b*

Fig. 22c

Fig. 22d

Fig. 23a

Fig. 23b

Fig. 23c

Fig. 23d

Fig. 24 b

Fig. 24 a

Fig. 25

EP 2 317 633 A2

Fig. 26

41

Fig. 27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. CHANG.** Comparison of AC drives for electric vehicles - A report on experts' opinion survey. *IEEE AES Systems Magazine,* August 1994, vol. 9 (8), 7-11
- **N. HASHEMNIA ; B. ASAEI.** Comparative study of using different electric motors in the electric vehicles. *Proceedings of the 2008 International Conference on Electrical Machines,* September 2008, 1257-1261
- **M. TERASHIMA ; T. ASHI-KAGA ; T. MIZUNO ; K. NATORI ; N. FUJIWARA ; M. YADA.** Novel motors and controllers for high-performance electric vehicle with four in-wheel motors. *IEEE Transactions on Industrial Electronics,* February 1997, vol. 44 (1), 28-37
- **K. OHYAMA, M.N.F. ; NASHED, K. ; ASO, H. FUJII ; H. UEHARA.** Design using finite element analysis of Switched Reluctance Motor for Electric Vehicle. *Information and Communication Technologies, IC-TTA'06,* April 2006, vol. 1, 727-732
- **L. WEILI ; S. MAN ; H. FEI.** Optimal design and finite element analysis of switched reluctance motor for electric vehicles. *IEEE Vehicle and Propulsion Conference (VPPC,* September 2008, 1-5
- **F. CARICCHI ; F. CRESCIMIBINI ; O. HONORATI ; A. DI NAPOLI ; E. SANTINI.** Compact wheel direct drive for EVs. *IEEE Industry Applications Magazine,* November 1996, vol. 2 (6), 25-32
- **N. B. SIMSIR ; H. B. ERTAN.** A comparison of torque capabilities of axial flux and radial flux type of brushless DC (BLDC) drives for wide speed range applications. *IEEE Int. Conference on Power Electronics and Drive Systems, PEDS'99,* July 1999, 719-724
- **Z. ZHANG ; F. PROFUMO ; A. TENCONI.** Axial flux machines Drives: A new viable solution for electric cars. *IEEE Trans. on Industrial Electronics,* February 1997, vol. 44 (1), 39-45

- **F. CARICCHI ; F. CRESCIMIBINI ; F. MEZZETTI ; E. SANTINI.** Multi-stage axial-flux PM machine for wheel direct drive. *IEEE Trans. on Industry Applications,* October 1995, vol. 1, 679-684
- **H.C. LOVATT ; V.S. RAMSDEN ; B.C. MECROW.** Design of an in-wheel motor for a solar-powered electric vehicle. *IEE Proceedings of Electric Power Applications,* September 1998, vol. 145 (5), 402-408
- **G. KASTINGER.** Contributions to small electrical drives with toroidal coils'', ''Beiträge zu Ringspulenkleinantriebe. *Ph.D. Thesis,* 2001
- **S. HUANG ; J .LUO ; F. LEONARDI ; T. A. LIPO.** A Comparison of power density for axial flux machines based on general purpose sizing equations. *IEEE Trans. on Energy Conversion,* June 1999, vol. 14, 185-192
- **P. ANPALAHAN ; J. SOULARD ; H. P. NEE.** Design steps towards a high power factor transverse flux machine. *Proceedings of European Conference and Applications (EPE,* August 2001, 1-6
- **J. BIRD ; T. A. LIPO.** Calculating the forces created by an electrodynamic wheel using a 2-D steady-state finite element method. *IEEE Trans. Magnetics,* March 2008, vol. 44 (3), 365-372
- **BANG, D. ; POLINDER, H. ; SHRESTHA, G. ; FERREIRA, J. A.** Comparative design of radial and transverse flux PM generators for direct-drive wind turbines. *18th International Conference on Electrical Machines, ICEM 2008,* September 2008, 1-6
- **WEBB, B. C. ; RE, M. E. ; RUSSAK, M. A. ; JAHNES, C. V.** Interference resonances in the permeability of laminated magnetic thin films. *Journal of Applied Physics,* October 1990, vol. 68 (8), 4290-4293
- **WALSER, R. M. ; VALANJU, A. P.** Displacement Eddy currents in Magnetic laminates. *IEEE Trans. Magnetics,* September 1992, vol. 2 (5), 2280-2282